Europäisches Patentamt

European Patent Office

Office européen des brevets

(19)

(11) **EP 1 491 496 A1**

(12) **EUROPEAN PATENT APPLICATION**
published in accordance with Art. 158(3) EPC

(43) Date of publication:
**29.12.2004 Bulletin 2004/53**

(51) Int Cl.⁷: **C01B 31/02**

(21) Application number: **03712696.8**

(22) Date of filing: **13.03.2003**

(86) International application number:
**PCT/JP2003/003033**

(87) International publication number:
**WO 2003/076335 (18.09.2003 Gazette 2003/38)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.03.2002 JP 2002068311**
         **26.06.2002 JP 2002185832**
         **18.07.2002 JP 2002210064**
         **24.07.2002 JP 2002214990**
         **25.07.2002 JP 2002216086**
         **25.07.2002 JP 2002216087**
         **09.08.2002 JP 2002233104**
         **10.09.2002 JP 2002264612**
         **29.10.2002 JP 2002314300**
         **08.11.2002 JP 2002325704**

(71) Applicant: **Mitsubishi Chemical Corporation**
**Tokyo 108-0014 (JP)**

(72) Inventors:
• **NOGUCHI, Naoki**
  **c/o Mitsubishi Chemical Corporation**
  **Kitakyushu-shi, Fukuoka 806-0004 (JP)**
• **ASATANI, Haruo**
  **c/o Mitsubishi Chemical Corporation**
  **Yokohama-shi, Kanagawa 227-0033 (JP)**
• **SAIDA, Soichiro**
  **Mitsubishi Chemical Corporation**
  **Yokohama-shi, Kanagawa 227-0033 (JP)**
• **KIKUCHI, Yasuharu**
  **Mitsubishi Chemical Corporation**
  **Kitakyushu-shi, Fukuoka 806-0004 (JP)**
• **ARIKAWA, Mineyuki**
  **Mitsubishi Chemical Corporation**
  **Kitakyushu-shi, Fukuoka 806-0004 (JP)**

(74) Representative: **Grünecker, Kinkeldey,**
**Stockmair & Schwanhäusser Anwaltssozietät**
**Maximilianstrasse 58**
**80538 München (DE)**

(54) **PROCESS FOR PRODUCTION OF FULLERENES AND METHOD FOR SEPARATION THEREOF**

(57)    A process for the production of fullerenes by which a high-purity fullerene can be separated at high productivity from a mixture comprising a fullerene, a polycyclic aromatic hydrocarbon component, and a carbonaceous polymeric component and which comprises the step (A) of preparing a mixture comprising a fullerene, a polycyclic aromatic hydrocarbon component, and a carbonaceous polymeric component, the step (B) of separating this mixture into a polycyclic aromatic hydrocarbon component and a mixture of a fullerene and a carbonaceous polymeric component, and the step (C) of separating this mixture into a fullerene and a carbonaceous polymeric component.

EP 1 491 496 A1

**Description**

Technical Field to which the Invention Belongs

The present invention relates to a process for producing fullerenes which are novel carbonaceous materials, especially fullerenes having molecular structures of $C_{60}$, $C_{70}$, $C_{76}$, $C_{78}$, $C_{82}$, $C_{84}$ and the like.

Prior Art

Fullerenes which are novel carbonaceous materials are expected to show specific properties because of special molecular structures, and the studies on properties thereof and the development of usage thereof have been increasingly made. Fullerenes are expected to be used in the fields of, for example, diamond coatings, battery materials, paints, insulation materials, lubricants and cosmetics.

As a method for producing fullerenes, (1) a method in which electrodes made of a carbonaceous material such as graphite are used as starting materials and arc discharge is applied between the electrodes to evaporate the starting materials (arc discharge process), (2) a method in which a high current is passed through a carbonaceous starting material to evaporate the starting material (resistance heating method), (3) a method in which a carbonaceous starting material is evaporated by application of a pulse laser with a high energy density (laser evaporation method), (4) a method in which an organic material such as benzene is subjected to incomplete combustion (combustion method), (5) a method in which an organic material such as benzene is subjected to thermal cracking (thermal cracking method), and the like have been known.

Of these, the combustion method and the thermal cracking method are useful because fullerenes can be purified in large quantities. Meanwhile, in the method using a hydrocarbon compound as a starting material, as seen in the combustion method or the thermal cracking method, the starting material has hydrogen atoms, so that polycyclic aromatic hydrocarbons are by-produced.

For example, when fullerenes are produced by the combustion method, a hydrocarbon compound such as toluene is subjected to incomplete combustion under controlled conditions. Then, a sooty material containing plural fullerenes, mainly a fullerene having a molecular structure of $C_{60}$ and a fullerene having a molecular structure of $C_{70}$ are obtained. However, this sooty material usually contains from 10 to 30% by weight of fullerenes and from 10 ppm to 5% by weight of polycyclic aromatic hydrocarbons.

Substances other than fullerenes and polycyclic aromatic hydrocarbons in the sooty material are carbon having a graphite structure, polymeric hydrocarbons having a graphite structure as a skeleton and some hydrogen atoms attached on it, carbon black and the like (hereinafter sometimes referred to as a "carbon-based polymeric component").

Polycyclic aromatic hydrocarbons formed in producing fullerenes have a low rate of hydrogen atom among hydrocarbons and similar to fullerenes in composition. Accordingly, when polycyclic aromatic hydrocarbons are mingled in fullerenes, they can inhibit the reactivity of fullerenes or block inherent properties of fullerenes. In view of a safety as well, it is considered to be necessary to reduce these polycyclic aromatic hydrocarbons as much as possible.

It has so far been known from various documents that polycyclic aromatic hydrocarbons are formed along with fullerenes by the combustion method or the thermal cracking method (see, for example, patent documents 1 and 2).

As a method for purifying fullerenes, separation with a column using various packing agents (see, for example, patent documents 3 and 4) has been known.

Patent Document 1: PCT 92/20622
Patent Document 2: PCT 95/06001
Patent Document 3: JP-A-6-32151
Patent Document 4: U. S. Patent No. 5,662,876

Problems to be Solved by the Invention

However, when polycyclic aromatic hydrocarbons were formed along with fullerenes by the combustion method or the thermal cracking method, no specific industrial method for efficiently removing polycyclic aromatic hydrocarbons from this mixture has been indicated.

A method for separating and purifying fullerenes with a column using various packing agents is difficult to apply to the production of fullerenes in large quantities. Further, unless hydrocarbons are used as a fullerene starting material, polycyclic aromatic hydrocarbons are not formed, and the separation thereof at good efficiency is not described at all.

Under these circumstances, it is an object of the invention to provide a process for producing fullerenes in which fullerenes having a good productivity and a high purity can be separated from a mixture of fullerenes, polycyclic aromatic hydrocarbons and a carbon-based polymeric component. Another object of the invention is to provide fullerenes which are produced in large quantities with a good purity.

Means for Solving the Problems

The invention has solved the foregoing objects by adopting a process for producing a fullerene comprising the following steps:

(step A) a step of forming a mixture comprising fullerene, polycyclic aromatic hydrocarbons and a carbon-based polymeric component,
(step B) a step of separating the mixture into polycyclic aromatic hydrocarbons, and a mixture of fullerene and carbon-based polymeric component, and
(step C) a step of separating the mixture of fullerene and a carbon-based polymeric component into fullerene and carbon-based polymeric component.

Further, the foregoing objects can also be solved by employing a process for producing a fullerene comprising the following steps:

(step A) a step of forming a mixture comprising fullerene, polycyclic aromatic hydrocarbons and a carbon-based polymeric component,
(step D) a step of separating the mixture into a mixture of polycyclic aromatic hydrocarbons and fullerene, and carbon-based polymeric component, and
(step E) a step of separating the mixture of polycyclic aromatic hydrocarbons and fullerene into polycyclic aromatic hydrocarbons and fullerene.

Still further, the foregoing objects can also be solved by employing a method for separating a fullerene comprising the following steps:

(step B) a step of separating a mixture comprising fullerene, polycyclic aromatic hydrocarbons and a carbon-based polymeric component into polycyclic aromatic hydrocarbons, and a mixture of fullerene and carbon-based polymeric component,
(step C) a step of separating the mixture of fullerene and carbon-based polymeric component into fullerene and carbon-based polymeric component.

Furthermore, the foregoing objects can also be solved by employing a process for separating a fullerene comprising the following steps:

(step D) a step of separating a mixture comprising fullerene, polycyclic aromatic hydrocarbons and a carbon-based polymeric component into a mixture of polycyclic aromatic hydrocarbons and fullerene, and carbon-based polymeric component, and
(step E) a step of separating the mixture of polycyclic aromatic hydrocarbons and fullerene into polycyclic aromatic hydrocarbons and fullerene.

Since fullerene is produced using the foregoing production process or the separation process, a high-purity fullerene can be separated in large quantities.

Brief Description of the Drawings

Fig. 1 is a step chart of specific step examples 1 and 2,
Fig. 2(a) is a flow chart of the specific step example 1,
Fig. 2(b) is a flow chart of the specific step example 2,
Fig. 3 is a step chart of the specific step examples 3 and 4,
Fig. 4(a) is a flow chart of the specific step example; 3,
Fig. 4(b) is a flow chart of the specific step example 4,
Fig. 5(a) is a plan view of the sublimation device used in Examples 6, 7 and 9,
Fig. 5(b) is a front view of Fig. 5(a),

Fig. 5(c) is a schematic view showing a state in which the sublimation device shown in Fig. 5(a) and Fig. 5 (b) is mounted in an electric furnace,

Fig. 6(a) is a plan view of the sublimation device used in Example 8, and

Fig. 6(b) is a front view of Fig. 6(a).

Embodiment of the Invention

The invention is described in details below.

The invention is a process for producing a fullerene or for separating a fullerene. The fullerene refers to a spherical carbon molecule in which 60 or more carbon atoms are spherically bound. Specifically, it is a general term referring to fullerenes having molecular structures with the carbon number of 60, 70, 76, 78, 82, 84 and the like. In this specification, a fullerene having a molecular structure with the carbon number of 60 is simply referred to as "$C_{60}$", a fullerene having a molecular structure with the carbon number of 70 as "$C_{70}$", a fullerene having a molecular structure with the carbon number of 76 as "$C_{76}$", a fullerene having a molecular structure with the carbon number of 78 as "$C_{78}$", a fullerene having a molecular structure with the carbon number of 82 as "$C_{82}$", a fullerene having a molecular structure with the carbon number of 84 as "$C_{84}$", and a mixture of two or more of the fullerenes having the foregoing molecular structures as "a fullerene".

First of all, a process for forming a fullerene (step A) is described.

(Step A)

The fullerene in the invention is not particularly limited. It is preferably formed by a combustion method in which a hydrocarbon compound as the starting material is subjected to incomplete combustion or a thermal cracking method in which a hydrocarbon compound as the starting material is cracked at a high temperature. By the combustion method or thermal cracking method, not only fullerene but also a mixture of fullerene with polycyclic aromatic hydrocarbons and a carbon-based polymeric component, a so-called sooty material, is obtained. The mixture can be mass-produced by the combustion method or the thermal cracking method. Of these, the combustion method is preferable because the content of polycyclic aromatic hydrocarbons in the mixture of fullerene, polycyclic aromatic hydrocarbons and carbon-based polymeric component can be relatively low.

The polycyclic aromatic hydrocarbons refer to polycyclic aromatic hydrocarbons such as benzanthracene and benzpyrene. The carbon-based polymeric component refers to an aggregate of hydrocarbon compounds having a larger carbon number than fullerene, such as high-molecular hydrocarbons with a graphite structure having a carbon, graphite structure as a skeleton and some hydrogen atoms attached on it, and carbon black.

As a starting material of fullerene in the combustion method or the thermal cracking method, aromatic hydrocarbons having from 6 to 20 carbon atoms, such as benzene, toluene, xylene, naphthalene, methylnaphthalene, anthracene and phenanthrene are preferably used, and aromatic hydrocarbons having from 6 to 15 carbon atoms are more preferably used. Especially, aromatic hydrocarbons which are liquid at normal temperature and normal pressure are preferable in view of easy handling. As a starting material, aliphatic hydrocarbons such as hexane, heptane and octane may be used in combination with these aromatic hydrocarbons. Further, hydrocarbons which are solid at normal temperature and normal pressure can be used, dissolved in liquid hydrocarbons.

If fullerene is produced by the combustion method, the pressure condition is preferably from 1,330 to 13,300 Pa (from 10 to 100 Torr), more preferably from 3,990 to 6,650 Pa (from 30 to 50 Torr). The temperature condition is preferably from 800 to 2,500°C, more preferably from 1,000 to 2,000°C.

If the pressure is much higher than the foregoing range, the productivity of fullerene tends to extremely decrease. If the pressure is quite low, the production apparatus is highly restricted to make difficult the industrial production. If the temperature is notably deviated from the foregoing range, the productivity of fullerene will extremely decrease.

In the combustion method, the hydrocarbon used as a starting material of fullerene serves also as a heat source. That is, it is considered that hydrocarbon reacts with oxygen to generate heat which increases the temperature to such an extent that fullerene can be formed and the hydrocarbon is dehydrogenated to form carbon units for forming the fullerene skeleton. The carbon units aggregate under certain pressure and temperature conditions to form the fullerene.

Since fullerene made only of carbon atoms is formed from the starting hydrocarbon material, the required amount of oxygen slightly varies depending on the carbon atom/hydrogen atom ratio of the starting hydrocarbon. For example, if toluene is used as the starting hydrocarbon, the amount of oxygen is preferably from 0.5 to 9 mols, more preferably from 1 to 5 mols per mol with respect to toluene. If a starting material other than toluene is used, it is advisable to properly adjust the amount of oxygen used in consideration of the carbon atom/hydrogen atom ratio of the starting hydrocarbon. If the amount of oxygen is too large, the starting hydrocarbon would be burned and converted to carbon dioxide, which decreases the productivity of fullerene. If the amount of oxygen is too small, the hydrogen atom in the starting material would not be consumed, which increases the amount of the polycyclic aromatic hydrocarbons formed.

In the reaction system in the combustion method, an inactive gas to a fullerene, in addition to oxygen, may be present. Examples of the inactive gas include helium, neon, argon, nitrogen, and carbon dioxide.

The fullerene-containing mixture obtained by the combustion method contains fullerene and polycyclic aromatic hydrocarbons, and the residue is usually a carbon-based polymeric component including high-molecular hydrocarbons with a graphite structure having a carbon graphite structure as a skeleton and some hydrogen atoms, carbon black and the like.

In the mixture obtained by the combustion method contains fullerene in an amount of, preferably 5% by weight or more, more preferably 10% or more, especially preferably 15% or more.

The fullerene produced by the present invention is not limited in the carbon number so long as it has a fullerene structure. Usually, it is a fullerene having the carbon number of from 60 to 84. The content of $C_{60}$ and $C_{70}$ is preferably 50% or more, more preferably 70% or more, especially preferably 80% or more with respect to all the fullerenes.

The formation of polycyclic aromatic hydrocarbons is unavoidable in view of the reaction mechanism in the combustion method. However, it is advisable to reduce the amount thereof as much as possible. Accordingly, the amount of the polycyclic aromatic hydrocarbons in the sooty substance obtained by the combustion method is preferably from 100 ppm to 10,000 ppm, more preferably from 100 ppm to 5,000 ppm, especially preferably from 100 ppm to 1,000 ppm.

For separating and purifying fullerene from the mixture obtained by the foregoing method, there are roughly the following two methods. That is, the first separation method is a method in which fullerene is obtained by removing the polycyclic aromatic hydrocarbons having a low molecular weight and then removing the carbon-based polymeric component (method by the following steps B and C). The second separation method is a method in which fullerene is obtained by removing the carbon-based polymeric component having a high molecular weight and then removing the polycyclic aromatic hydrocarbons (method by the following steps D and E).

(Step B)

A step of separating the mixture of fullerene, polycyclic aromatic hydrocarbons and carbon-based polymeric component into polycyclic aromatic hydrocarbons and the mixture of fullerene and carbon-based polymeric component, and

(Step C)

a step of separating the mixture of fullerene and carbon-based polymeric component into fullerene and carbon-based polymeric component.

(Step D)

A step of separating the mixture of fullerene, polycyclic aromatic hydrocarbons and carbon-based polymeric component into the mixture of polycyclic aromatic hydrocarbons and fullerene, and carbon-based polymeric component, and

(Step E)

a step of separating the mixture of polycyclic aromatic hydrocarbons and fullerene into polycyclic aromatic hydrocarbons and fullerene.

To begin with, the first separation method is described.

(Step B)

The step B is a step of removing polycyclic aromatic hydrocarbons from the mixture. Specifically, a step of removing the same by sublimation (step B-1) or a step of removing the same by solvent extraction (step B-2) is used.

(Step B-1 (sublimation))

A preferred embodiment of the step B is a step of separating and removing polycyclic aromatic hydrocarbons by sublimating the mixture of fullerene, polycyclic aromatic hydrocarbons and carbon-based polymeric component.

The molecular weight of fullerene is 720 for $C_{60}$, and 840 for $C_{70}$. As for polycyclic aromatic hydrocarbons, the molecular weight of, for example, benzanthracene ($C_{18}H_{12}$) is 216, and the molecular weight of other typical polycyclic aromatic hydrocarbons is approximately less than 400. Therefore, only polycyclic aromatic hydrocarbons having a low molecular weight can be separated by sublimation.

Regarding the conditions for sublimation of the polycyclic aromatic compounds, the pressure is preferably from $1 \times 10^{-3}$ to $2 \times 10^5$ Pa, more preferably from $1 \times 10^{-2}$ to $1.4 \times 10^5$ Pa. The use of the normal pressure has a merit that an apparatus is simplified, and reduced pressure has a merit that the sublimation temperature for the polycyclic aromatic hydrocarbons is decreased. It is advisable to perform the sublimation under optimal conditions in consideration of economics. The temperature is preferably 100°C to 800°C. Since the sublimation temperature varies with the pressure, it is advisable to properly select the sublimation temperature. At normal pressure, the temperature is more preferably from 200°C to 700°C, most preferably from 300°C to 600°C. If the temperature is too low, the sublimation of polycyclic aromatic hydrocarbons would be insufficient. If the temperature is too high, fullerene, too, would be sublimated to decrease the recovery of fullerene.

A device used for the sublimation is not particularly limited so long as it withstands the foregoing temperature/pressure sublimation conditions, a batch-type device, a fixed bed-type device, a fluidized bed-type device, a continuous-type device and the like may be used. As the material used for the sublimation device quartz glass, metals such as stainless steel, ceramics, glass and the like may be used.

The sublimation is conducted in the presence of an inactive gas. In the invention, the inactive gas means a gas which is substantially unreactive with fullerene under the temperature/pressure conditions for sublimation. Inactive gas includes helium, neon, argon, nitrogen and a mixture of them. In order to avoid reaction with fullerene, the inside of the sublimation device is substantially replaced with inactive gas for sublimation, and the content of oxygen in the gas within the sublimation device is preferably 10% by volume or less, more preferably 5% by volume or less, especially preferably 1% by volume. If the content of oxygen is high, an oxide of fullerene might be formed.

It is advisable to conduct the sublimation of polycyclic aromatic hydrocarbons by heating in the presence of inactive gas. It is preferable to conduct the sublimation while flowing an inactive gas. In a method in which the sublimation is conducted while flowing an inactive gas, for example, an inlet and an outlet of the inactive gas are formed in the sublimation device, and heating is conducted while continuously flowing an inactive gas in and out to increase to a predetermined temperature. Further, the inactive gas may be preheated before flowing it in the sublimation device.

The flow rate of the inactive gas in the sublimation while flowing the inactive gas is preferably from 1 to 10,000 ml/min, more preferably from 5 to 5,000 ml/min per gram of the mixture. The inactive gas may be flowed either continuously or intermittently.

The polycyclic aromatic hydrocarbons sublimated in the sublimation device can be accompanied by the inactive gas and precipitated by decreasing the temperature with a precipitation device. The precipitation device may be mounted either within the sublimation apparatus or separately, and it may be a batch-type device or a continuous-type device. The precipitated polycyclic aromatic hydrocarbons may be recovered either by mechanically collecting or by dissolving in a solvent. The inactive gas after precipitating and recovering the polycyclic aromatic hydrocarbons may be discharged to ambient atmosphere or reused by recycling. An operation time varies with the temperature, the pressure and the flow rate of the gas. It is usually from 10 minutes to 12 hours.

As a precipitation-recovery method, for example, a method in which a sublimate-containing gas is blown to a cooled rotary drum to precipitate the polycyclic aromatic hydrocarbons, which are scraped with a scraper intermittently or continuously and dissolved in a hydrocarbon, or the polycyclic aromatic hydrocarbons adhered to the rotary drum are washed out with a hydrocarbon, a method in which a gas containing the polycyclic aromatic hydrocarbons is charged into a cooled container, and the polycyclic aromatic hydrocarbon precipitated on the wall surface of the container is dissolved in a hydrocarbon, a method in which the gas is cooled by spraying hydrocarbon or flowing into a liquid for precipitation, and a method in which the polycyclic aromatic hydrocarbons are precipitated into water by spraying water or flowing into water and are extracted with a hydrocarbon may be used.

(Step B-2 (solvent extraction))

Another preferred embodiment of the step B is a step of separating and removing polycyclic aromatic hydrocarbons from the mixture comprising fullerene, polycyclic aromatic hydrocarbons and carbon-based polymeric component by extraction.

Among fullerene, polycyclic aromatic hydrocarbons and carbon-based polymeric substance, polycyclic aromatic hydrocarbons are easily soluble in an organic solvent. Fullerenes are hardly soluble in many organic solvents, but soluble in some aromatic solvents. Carbon-based polymeric compounds are substantially insoluble in a solvent. Accordingly, only polycyclic aromatic hydrocarbons, which are relatively soluble in a solvent, can be separated by extraction.

As the solvent used in the B-2 step, an organic solvent (hereinafter referred to as "first organic solvent") in which the solubility of $C_{60}$ is 10 mg/L or less, preferably 0.01 mg/mL or less is used. An extract having dissolved therein the polycyclic aromatic hydrocarbons in the abovesaid mixture can be obtained by using the first organic solvent. The mixture of fullerene and carbon-based polymeric component is obtained by subjecting the extract and the undissolved mixture of fullerene and carbon-based polymeric component to solid-liquid separation.

As the first organic solvent, alcohols, ketones, ethers, amides and the like may be used. Among them, alcohols having from 1 to 4 carbon atoms, ketones having from 3 to 5 carbon atoms or ethers having from 3 to 5 carbon atoms are preferable. Alcohols having from 1 to 4 are more preferable. Of these alcohols, alcohols having 3 or less carbon atoms are preferably used. Specifically, alcohols having from 1 to 4 carbon atoms, such as methanol, ethanol, propanol, ethylene glycol and glycerin, ketones having from 3 to 5 carbon atoms, such as acetone and methyl ethyl ketone, ethers having from 2 to 5 carbon atoms, such as tetrahydrofuran, diethyl ether and dioxane, and amides having from 3 to 5 carbon atoms, such as N,N-dimethylformamide, and mixed solvents containing them. Among them, alcohols are preferable, and ethanol, methanol and 2-propanol (isopropyl alcohol) are especially preferable. These organic solvents may be used either singly or in combination of two or more.

As an extraction device, an arbitrary device can be used, and a stirring/mixing bath can preferably be used. In the extraction, the pressure inside the container is not particularly limited. It is possible to conduct the extraction at normal pressure. The temperature in the extraction is, for example, from 1 to 90°C, preferably from 15 to 40°C, especially preferably from 25 to 35°C from the standpoint of extraction efficiency. Since the extraction efficiency is less dependent on the temperature, it is advantageous, to conduct the extraction at normal temperature in view of energy cost.

As for the extraction time, it is advisable to conduct the extraction for 1 to 60 minutes, preferably 20 to 40 minutes. Since the extraction time does not influence the extraction efficiency so much, long time is unnecessary. It is advisable to properly select the extraction temperature and the extraction time. Moreover, it is advisable to conduct the extraction, as required, while applying an ultrasonic wave or the like to the extract because the extraction time is shortened.

The addition amount of the first organic solvent is preferably 1 to 10 parts by weight, more preferably 3 to 7 parts by weight per one part by weight of the mixture. This range is preferable because the polycyclic aromatic hydrocarbons are dissolved in the organic solvent without being precipitated and the fullerene and the carbon-based polymeric component are precipitated. The addition method is arbitrary. It is advisable to gradually add the organic solvent.

The first organic solvent is added under a specific control, whereby the solubility of the fullerene in the extraction solvent is decreased, the fullerene and the carbon-based polymeric component are precipitated, and the polycyclic aromatic hydrocarbons remain in the solution.

The solution having fullerene and carbon-based polymeric component precipitated therein is allowed to stand still for 1 to 30 minutes, preferably 5 to 15 minutes. The insoluble matters are fractionated (for example, filtrated) efficiently by being allowed to stand still.

If the time of allowing to stand still is too short, the precipitation of the insoluble matters would be insufficient, and the fractionation (for example, filtration) of the insoluble matters might take long time. On the contrary, if the time is too long, the time required for the overall process for producing the fullerene would be prolonged.

The insoluble matters are fractionated by use of a centrifugal separator 17 after being allowed to stand still. The fractionation method may be filtration or both of centrifugation and filtration. The fractionation method can properly be selected. It is advisable to conduct the filtration by use of a filter having an opening diameter of 0.1 to 1 $\mu$m, preferably 0.4 to 0.6 $\mu$m. At this time, the filtration can efficiently be conducted under reduced pressure or by pressure filtration. As for the degree of reduction of pressure, it is preferable to conduct the vacuum filtration by reducing the pressure to $1 \times 10^2$ to $3 \times 10^4$ Pa, especially $5 \times 10^3$ to $2 \times 10^4$ Pa. If the degree is high, a high-performance pump is required, so that the cost will increase. If the degree is low, the filtration would not proceed. The degree of pressure applied is preferably $1.5 \times 10^5$ to $5 \times 10^5$ Pa. If the degree of pressure is low, the filtration would be slow. If the degree of pressure is high, cracking of a cake would occur, so that washing would not be conducted well.

(Step C)

The step C is a step of separating fullerene and carbon-based polymeric component from the mixture of fullerene and carbon-based polymeric component separated in the step B. Specifically, a step of recovering fullerene by sublimation (step C-1) or a step of recovering fullerene by solvent extraction (step C-2) is used.

(Step C-1 (sublimation))

A preferred embodiment of the step C is a step of separating and recovering fullerene from the mixture of fullerene and carbon-based polymeric component obtained in the step B-1 or B-2 by sublimation.

Fullerene can be separated from carbon-based polymeric component, which is substantially unsublimated, using the property of fullerene that it is considerably stable thermally in the absence of reactive substances.

The pressure condition for the sublimation is $1 \times 10^{-3}$ Pa to $2 \times 10^5$ Pa, preferably $2 \times 10^{-3}$ Pa to normal pressure. The use of normal pressure has a merit that a device is simplified, and the use of reduced pressure has a merit that the sublimation temperature of fullerene decreases. It is advisable to conduct the sublimation under optimal conditions in consideration of economy.

The sublimation is conducted in the presence of an inactive gas. In this invention, the inactive gas means a gas which is substantially unreactive with fullerene under the temperature/pressure conditions for the sublimation. Examples of the inactive gas include helium, neon, argon, nitrogen and a mixture of them. In order to avoid the reaction with fullerene, the inside of the sublimation device is substantially replaced with the inactive gas for the sublimation, and the content of oxygen in the gas within the sublimation device is preferably 10% by volume or less, more preferably 5% by volume or less, especially preferably 1% by volume. If the content of oxygen is high, an oxide of fullerene might be formed.

It is advisable to conduct the sublimation of fullerene by heating in the presence of an inactive gas. It is preferable to conduct the sublimation while flowing an inactive gas. In a method in which the sublimation is conducted while flowing an inactive gas, an inlet and an outlet of the inactive gas are formed in the sublimation device. While continuously flowing an inactive gas in and out to replace the device is replaced with an inactive gas, the fullerene-containing mixture is heated to a predetermined temperature.

If the substitution is not performed satisfactorily, an oxide of fullerene would be formed. The inactive gas may or may not be preheated for the sublimation. The device used in the sublimation is not particularly limited. A batch-type device, a fixed bed-type device, a fluidized bed-type device, a continuous-type device and the like may be used.

The flow rate of the inactive gas in conducting the sublimation while passing the inactive gas is preferably 1 to 10,000 ml/min, more preferably from 5 to 5,000 ml/min per gram of the mixture. The inactive gas may be passed either continuously or intermittently.

The temperature of the mixture in sublimating the fullerene is usually 400°C to 1,400°C, preferably from 600 to 1,200°C, further preferably from 800°C to 1,100°C.

The material used is not particularly limited, and quartz glass, metals such as stainless steel, ceramics, glass and the like may be used. The fullerene sublimated from the sublimation device is fed by the inactive gas, and precipitated by decreasing the temperature. A precipitation device may be mounted in the sublimation device or separately, and it may be a batch-type device or a continuous-type device. The precipitated fullerene may be recovered by mechanically collecting or by dissolving in a solvent. The inactive gas after precipitating and recovering fullerene is discharged to ambient atmosphere or reused by recycling. The operation time varies with the temperature, the pressure and the gas flow rate, and it is usually from 10 minutes to 12 hours.

If the step C-1 is conducted after the step B-1, both steps may be performed with different devices or with the same machine such as a kiln.

(Step C-2 (solvent extraction))

Another preferred embodiment of the step C is a step of separating and recovering fullerene from the mixture of fullerene and carbon-based polymeric component obtained in the step B-1 or B-2 by extraction.

By utilizing the property that fullerene is soluble in some organic solvent such as an aromatic solvent, fullerene can be separated from carbon-based polymeric component which is substantially not soluble in a solvent. That is, the carbon-based polymeric component undissolved in the extract is subjected to solid-liquid separation, whereby the fullerene dissolved in the extract can be separated from carbon-based polymeric component undissolved in the extract.

If the second organic solvent used as the extraction solvent is too low in solubility of fullerene, the extraction efficiency decreases. Accordingly, the solubility of fullerene, especially $C_{60}$ is preferably 1 g/L, more preferably 5 g/L or more, further preferably 10 g/L or more, especially preferably 15 g/L or more.

As such a second organic solvent, aromatic hydrocarbons, halogenated aromatic hydrocarbons, aliphatic hydrocarbons, chlorinated hydrocarbons, ketones having 6 or more carbon atoms, esters having 6 or more, ethers having 6 or more, carbon disulfide and the like may be used. They may be used either singly or in combination of two or more at an optional ratio.

The aromatic hydrocarbons are hydrocarbon compounds having at least one benzene ring in a molecule. Specific examples thereof include benzene, toluene, xylene, alkylbenzenes such as ethylbenzene, n-propylbenzene, isopropylbenzene, n-butylbenzene, see-butylbenzene, tert-butylbenzene, 1,2,3-trimethylbenzene, 1,2,4-trimethylbenzene, 1,3,5-trimethylbenzene, 1,2,3,4-tetramethylbenzene, 1,2,3,5-tetramethylbenzene, diethylbenzene and cymene; alkylnaphthalenes such as 1-methylnaphthalene; tetralin, cymene and the like. Among them, 1,2,4-trimethylbenzene and tetralin are preferable.

As the aliphatic hydrocarbons, arbitrary ones such as cyclic and acyclic aliphatic hydrocarbons can be used. Examples of the cyclic aliphatic hydrocarbons include monocyclic aliphatic hydrocarbons such as cyclopentane, cyclohexane, cycloheptane and cyclooetane; derivatives thereof such as methylcyclopentane, ethylcyclopentane, meth-

EP 1 491 496 A1

ylcyclohexane, ethylcyclohexane, 1,2-dimethylcyclohexane, 1,3-dimethylcyclohexane, 1,4-dimethylcyclohexane, isopropylcyclohexane, n-propylcyclohexane, t-butylcyclohexane, n-butylcyclohexane, isobutylcyclohexane, 1,2,4-trimethylcyclohexane and 1,3,5-trimethylcyclonexane; and polycyclic aliphatic hydrocarbons such as decalin. Examples of acyclic aliphatic hydrocarbons include n-pentane, n-hexane, n-heptane, n-octane, isooctane, n-nonane, n-decane, n-dodecane, n-tetradecane and the like.

Examples of chlorinated hydrocarbons include dichloromethane, chloroform, carbon tetrachloride, trichloroethylene, tetrachloroethylene, 1,2-dichloroethane, 1,1,2,2-tetrachloroethane and the like.

Examples of halogenated aromatic hydrocarbons include chlorobenzene, dichlorobenzene, 1-chloronaphthalene and the like.

Among these extraction solvents, those which are a liquid at normal temperature and have the boiling point of 100 to 300°C, especially from 120 to 250°C are preferable from an industrial standpoint. Specifically, it is preferable to use aromatic hydrocarbons such as benzene, toluene, xylene, metysilene, 1-methylnaphthalene, 1,2,3,5-tetramethylbenzene, 1,2,4-trimethylbenzene and tetralin, and the like. They may be used either singly or as a mixed solvent containing two or more.

The second organic solvent has to be used in such an amount that fullerene can be extracted sufficiently. The amount is preferably 5 to 400 times by weight, preferably 40 to 200 times by weight in view of economy, with respect to the amount of fullerene in the mixture. The type of the device for the extraction are not particularly limited, and a batch type, a semi-continuous type, a continuous type or a combination thereof may be used.

The mixture usually contains 5 to 30% by weight of fullerene. From the standpoint of the extraction efficiency, it is advisable to set the amount of the extraction solvent used for fullerene within the foregoing range. Accordingly, it is advisable that a part of the mixture is analyzed prior to the extraction procedure to measure the content of fullerene in the mixture.

Since carbon-based polymeric component is little dissolved, the extract will be in the form of a slurry. An undissolved matter is separated from the slurry by subjecting the slurry to solid-liquid separation e.g. by filtration. The filtration may be vacuum filtration, pressure filtration, gravity filtration, filter filtration and a combination thereof, and the method and the device thereof are not particularly limited. Among them, pressure filtration is preferable.

As the extraction device, a stirring/mixing bath can advantageously be used. In the extraction, the pressure within the container is not particularly limited, and the extraction may be performed at normal pressure. The temperature in the extraction is usually -10 to 150°C, preferably from 5 to 80°C, more preferably from 30 to 50°C. These ranges are preferable from the standpoint of extraction efficiency. However, since the extraction efficiency is not so dependent on the temperature, it is advantageous, in view of the energy cost, to conduct the extraction at normal temperature.

As for the extraction time, it is advisable to conduct the extraction for 1 to 60 minutes, preferably from 20 to 40 minutes. Long time is unnecessary. Since the extraction time does not influence the extraction efficiency so much, it can properly be determined. Further, it is advisable that the extraction is conducted, as required, while applying an ultrasonic wave or the like to the extract because it shortens the extraction time.

Fullerene is dissolved in the thus-obtained extract.

The fullerene in the extract is then recovered, and a method for recovering the fullerene is not particularly limited. Preferable examples of a method for precipitating the fullerene as a solid include a method in which an extraction solvent in the extract is concentrated to precipitate the fullerene and a method in which a solvent (the following third organic solvent or fourth solvent) having a lower solubility of fullerene than the second organic solvent is mixed with the extract to precipitate the fullerene. These may be used in combination. That is, it is also possible that the extraction solvent is concentrated to a prescribed amount and then mixed with a poor solvent to precipitate the fullerene.

As a method for concentrating the extraction solvent, any of known methods may be used. Examples thereof include a) a method in which the solvent is concentrated under normal pressure or reduced pressure by increasing a temperature, and b) a method in which the solvent heated at a high temperature is flushed under reduced pressure using a spray drier. The extraction solvent is concentrated to less than a prescribed amount to thereby precipitate the fullerene.

As the concentration method, distillation by reduced pressure, evaporation by heating and a combination thereof can specifically be used. Regarding the concentration conditions, the pressure is preferably from 50 to $6 \times 10^4$ Pa, more preferably from $1 \times 10^2$ to $1.2 \times 10^4$ Pa, and the temperature is preferably from -10 to 200°C, more preferably from 10 to 150°C.

The fullerene in the extract may be precipitated according to the extent of the concentration. If the concentration is excessively conducted, the fullerene might be accompanied by impurities. Thus, the amount of the extract after the concentration is preferably from 5 times by weight to 300 times by weight, more preferably from 10 times by weight to 200 times by weight with respect to the fullerene in the extract.

If fullerene is extracted by the concentration, the precipitated fullerene can be recovered by filtration. The following third organic solvent or fourth solvent may be added to the extract after separating the fullerene by filtration, whereby the fullerene can further be precipitated.

However, a preferred embodiment is that, in order to avoid accompanying of polycyclic aromatic hydrocarbons, the degree of concentration is adjusted such that fullerene is little precipitated by concentration or the precipitation amount will be 5% by weight or less of the total amount of the fullerene to be recovered, and the following third organic solvent or fourth solvent is then added to further precipitate fullerene.

In the method in which fullerene is precipitated by mixing the extract with the following third organic solvent or fourth solvent to precipitate fullerene, the use amount of the third or fourth organic solvent is 0.1 to 50 times by weight, preferably 1 to 30 times by weight with respect to the amount of the extraction solvent (second organic solvent). If the amount is too small, the amount of the fullerene precipitated would be small, so that only a small amount of fullerene can be recovered. If it is too large, the volume of the vessel is increased to cause an economical loss. The temperature at which to mix the poor solvent is usually -20 to 150°C, preferably from -10 to 100°C, more preferably from 10 to 80°C, especially preferably from 30 to 60°C. As the third or fourth organic solvent to be used, not only one type of a solvent but also a mixed solvent of two or more may be used.

The fullerene precipitated by mixing the extract with the third or fourth organic solvent can be recovered by filtration.

The second separation method is described below.

(Step D)

The step D is a step of removing carbon-based polymeric substance from the mixture containing fullerene, polycyclic aromatic hydrocarbons and carbon-based polymeric component.

(Step D-1 (sublimation))

A preferred embodiment of the step D is a step of separating fullerene and polycyclic aromatic hydrocarbons from the mixture containing fullerene, polycyclic aromatic hydrocarbons and carbon-based polymeric component by sublimation.

Utilizing a property that carbon-based polymeric substance is hard to sublimate, the sublimation is first conducted under such temperature and pressure conditions that both of fullerene and polycyclic aromatic hydrocarbons are sublimated, thereby they can be separated from carbon-based polymeric component.

Since polycyclic aromatic hydrocarbons are sublimated under conditions of sublimating the fullerene, the same sublimation conditions as described in the foregoing step C-1 can be employed in this step D-1.

(Step D-2 (solvent extraction))

Another preferred embodiment of the step D is a step of separating fullerene and polycyclic aromatic hydrocarbons from the mixture comprising fullerene, polycyclic aromatic hydrocarbons and carbon-based polymeric component by extraction.

Utilizing a property that carbon-based polymeric substance is substantially insoluble in a solvent, the extraction is first conducted using a solvent in which both of fullerene and polycyclic aromatic hydrocarbons are soluble, thereby they can be separated from carbon-based polymeric substance. That is, the extract and the undissolved carbon-based polymeric component are subjected to solid-liquid separation, thereby fullerene and the polycyclic aromatic hydrocarbons dissolved in the extract can be separated from carbon-based polymeric substance undissolved in the extract.

As the extraction solvent which can be used at this time, the second organic solvent used in the step C-2 can be used. As the requirements for the extraction conditions, the extraction procedure for the extraction device, the separation of the extract, the method for recovering the fullerene and the polycyclic aromatic carbon in the extract and the like, the same requirements as in the step C-2 can be employed.

(Step E)

The step E is a step of separating fullerene and carbon-based polymeric substance from the mixture of fullerene and polycyclic aromatic hydrocarbons separated in the step D. Specifically, a step of removing polycyclic aromatic hydrocarbons by sublimation to recover fullerene (step E-1), a step of adding another extract to the extract having dissolved therein the mixture of fullerene and polycyclic aromatic hydrocarbons separated in the step D-2 to precipitate and recover fullerene (step E-2), a step of recovering fullerene from the mixture of fullerene and polycyclic aromatic hydrocarbons separated in the step D-1 by solvent extraction (step E-3), and a step of crystallizing and recovering fullerene from the extract having dissolved therein the mixture of fullerene and polycyclic aromatic hydrocarbons separated by the step D-2 (step E-4) are used.

(Step E-1 (sublimation))

A preferred embodiment of the step E is a step of sublimating only cyclic aromatic hydrocarbons from the mixture of fullerene and cyclic aromatic hydrocarbons obtained by the step D-1 or D-2 to separate and recover fullerene.

Utilizing a property that polycyclic aromatic hydrocarbons have a lower molecular weight than fullerene and are easy to sublimate, they can be separated under such temperature and pressure conditions that substantially polycyclic aromatic hydrocarbons alone are sublimated.

The mixture of fullerene and carbon-based polymeric component obtained by the step D-2 is dissolved in the second organic solvent. In this case, it is possible that, for example, the solid matter in the mixture of fullerene and cyclic aromatic hydrocarbons is recovered by the concentration procedure of the extraction solvent in the step C-2 or the solid matter in the mixture of fullerene and cyclic aromatic hydrocarbons is recovered by removing the second organic solvent through evaporation.

As the conditions for the step E-1 of sublimating the polycyclic aromatic hydrocarbons, the same sublimation conditions as described in the step B-1 can be employed.

(Step E-2 (solvent extraction 1))

Another preferred embodiment of the step E is a step of mixing the extract (hereinafter referred to as "the D-2 extract") having dissolved therein the mixture of fullerene and cyclic aromatic hydrocarbons as obtained in the step D-2 with a solvent in which fullerene is hardly soluble and polycyclic aromatic hydrocarbons are easily soluble, to dissolve the polycyclic aromatic hydrocarbons therein, and decreasing the dissolution amount of fullerene to precipitate fullerene as a solid.

In this method, fullerene and polycyclic aromatic hydrocarbons can be separated due to the difference between them in solubility in the solvent.

The solvent used at this time includes the following third aromatic solvent or fourth solvent.

Examples of a method for adding the third organic solvent or fourth solvent to the D-2 extract include a method in which the third organic solvent or fourth solvent is directly added to the D-2 extract, a method in which the third organic solvent or fourth solvent is added after concentrating the extraction solvent in the D-2 extract to a prescribed amount, a method in which the extraction solvent in the D-2 extract is evaporated to precipitate a solid matter and the third organic solvent or fourth solvent is then added. As a method for concentrating the extraction solvent in the D-2 extract, known methods can be used such as a method in which concentration is conducted at normal pressure or reduced pressure which increasing a temperature.

In the former two of these methods, fullerene can be separated and recovered by this step E-2. In the latter one method, fullerene can be separated and recovered by applying the same method as the step E-3 to be described later.

As a method for concentrating the D-2 extract, specifically vacuum distillation, evaporation by heating and a combination of them can be used. With respect to the concentration conditions, the pressure is preferably from 50 to $6 \times 10^4$ Pa, more preferably from $1 \times 10^2$ to $1.2 \times 10^4$ Pa, and the temperature is preferably from -10 to 200°C, more preferably from 10 to 150°C.

In some degree of the concentration, fullerene in the extract may be precipitated. If the concentration is excessive, fullerene might be accompanied by impurities. Accordingly, the amount of the extract after the concentration is preferably from 5 times by weight to 300 times by weight, more preferably from 10 times by weight to 200 times by weight with respect to the amount of fullerene in the extract.

If fullerene is precipitated by concentration, the precipitated fullerene can be recovered by filtration. The third organic solvent or fourth solvent is added to the extract after separating fullerene by filtration. Thereby fullerene can further be precipitated.

However, in a preferred embodiment, in order to avoid accompanying of polycyclic aromatic hydrocarbons, the degree of concentration is adjusted such that fullerene is little precipitated by concentration or the precipitation amount will be 5% by weight or less of the total amount of the fullerene to be recovered and the third organic solvent or fourth solvent is then added to further precipitate fullerene.

The third organic solvent or fourth solvent is not particularly limited so long as it is within the range of the following specific examples. It is advisable to select the same according to the type of the second organic solvent used as the extraction solvent in the D-2 extract. That is, it is advisable that the solubility in the third organic solvent or fourth solvent is 1/1,000 or less the solubility in the second organic solvent used as the extraction solvent in the D-2 extract. If the difference in solubility between the two solvents is smaller than the foregoing condition, the use amount of the third organic solvent or fourth solvent used in this step will increase. This is disadvantageous in view of the process.

As the third organic solvent, an organic solvent having the solubility of $C_{60}$ of 500 mg/L or less, preferably 100 mg/L or less, more preferably 10 mg/L or less may be used. By using the third organic solvent, an extract having dissolved therein polycyclic aromatic hydrocarbons in the mixture can be obtained. The extract and the mixture of fullerene and carbon-based polymeric component undissolved are subjected to solid-liquid separation to obtain the mixture of fullerene and carbon-based polymeric component.

Examples of the third organic solvent include alcohols, ketones, ethers, amides and the like. Among them, alcohols having from 1 to 4 carbon atoms, ketones having from 3 to 5 carbon atoms or ethers having from 3 to 5 carbon atoms are preferable. Alcohols having from 1 to 4 carbon atoms are more preferable. Of these alcohols, alcohols having 3 or less carbon atoms are preferably used. Specific examples thereof include alcohols having from 1 to 4 carbon atoms, such as methanol, ethanol, propanol, ethylene glycol and glycerin, ketones having from 3 to 5 carbon atoms, such as acetone and methyl ethyl ketone, ethers having from 2 to 5 carbon atoms, such as tetrahydrofuran, diethyl ether and dioxane, amides having from 3 to 5 carbon atoms, such as N,N-dimethylformamide, and mixed solvents containing some of them. Of these, alcohols are preferable, and 2-propanol (isopropyl alcohol) is especially preferable. These organic solvents may be used either singly or in admixture of two or more.

The use amount of the third organic solvent is from 0.1 to 50 times by weight, preferably from 1 to 30 times by weight, more preferably from 1 to 10 times by weight, especially preferably from 3 to 7 times by weight with respect to the amount of the extraction solvent in the D-2 extract. If the amount is too small, the amount of fullerene precipitated would be small. This decreases the amount of fullerene which can be recovered. If the amount is too large, the volume of the vessel would cause an economical loss. The temperature at which to mix the third organic solvent is usually from -20 to 150°C, preferably from -10 to 100°C, more preferably from 10 to 80°C, especially preferably from 30 to 60°C.

The rate of addition is not particularly limited. It is advisable to add gradually. Specifically, it is preferable to conduct the addition at a rate of 20 to 200 mL/min.

By the way, in the step E-2, it is possible to use, instead of the third organic solvent, the fourth solvent having a solubility of polycyclic aromatic hydrocarbons of 100 g/L or more, preferably 300 g/L or more and a solubility of fullerene of 1 g/L or less, preferably 0.5 g/L or less.

Specific examples of the fourth solvent include hydrophilic organic solvents such as a sulfoxide solvent having 4 or less carbon atoms, an amide solvent having 4 or less carbon atoms, an ether solvent having 4 or less carbon atoms, and an alcohol solvent having 4 or less carbon atoms. Of these, a solvent having a solubility in water of 20 g/L or more or a solvent infinitely soluble in water is preferable. Most preferable is a solvent containing dimethyl sulfoxide.

It is preferable that these solvents are used, mixed with water, and a mixed solvent of dimethyl sulfoxide and water is especially preferable.

The use amount of the fourth solvent is preferably 0.01 to 10 times by weight, more preferably from 0.1 to 1 time by weight with respect to the amount of the extraction solvent in the D-2 extract. If hydrophilic organic solvent and water are used in combination, the ratio thereof is properly selected to form a two-liquid phase with the extraction solvent in the D-2 extract. Specifically, if a mixed solvent of dimethyl sulfoxide and water is used, the ratio of dimethyl sulfoxide to water (weight ratio) is preferably 1:1 to 1:50, more preferably from 1:10 to 1:40.

The extraction temperature is -20 to 100°C, preferably from -10 to 50°C. The extraction procedure may be batchwise or continuous, and the device is not particularly limited.

If the D-2 extract is mixed with the fourth solvent, a two-liquid phase is formed, and a part of the polycyclic aromatic hydrocarbons are extracted to the fourth solvent side. The solubility of fullerene in the fourth solvent is quite low. Accordingly, after the extraction solvent in the D-2 extract and the fourth solvent are separated, the extraction solvent in the D-2 extract is removed, whereby fullerene with the concentration of polycyclic aromatic hydrocarbon decreased can be obtained.

After the third organic solvent or fourth solvent has been added, a seed crystal of fullerene such as $C_{60}$ may be added as required. The amount of the fullerene precipitated can thereby be increased.

After the third organic solvent or fourth solvent has been added, the solution containing polycyclic aromatic hydrocarbons may be allowed to stand still as required. The time of allowing to stand still is from 1 to 30 minutes, preferably from 5 to 15 minutes. Allowing to stand still is preferable because fractionation (e.g. filtration) can efficiently be conducted. If the period of allowing to stand still is too short, the precipitation of the precipitate would be insufficient, and it might take long time to fractionate the precipitate. On the contrary, if it is too long, the time required for the overall process for producing fullerene in the invention is prolonged.

The method for fractionation of the precipitate which is conducted after allowing to stand still is not particularly limited. The precipitate may be fractionated by centrifugation and then separated by filtration. Only centrifugation may be conducted, or only filtration may be conducted. The fractionation method can properly be selected.

It is advisable that the fullerene recovered by the foregoing method is washed with the third organic solvent or fourth solvent to remove impurities. The amount of the solvent used in the washing is preferably from 1 to 1,000 times by weight, more preferably from 3 to 300 times by weight with respect to the solid content. The temperature in the washing is preferably -20 to 150°C, more preferably -10 to 100°C.

(Step E-3 (solvent extraction 2))

Another preferred embodiment of the step E is a step of mixing the mixture of fullerene and polycyclic aromatic hydrocarbons obtained by the step D-1 with an organic solvent in which fullerene is hardly soluble but polycyclic aromatic hydrocarbons are easily soluble, to dissolve the polycyclic aromatic hydrocarbons therein and obtain the extract and recovering and separating the fullerene undissolved in the organic solvent.

As the solvent used in the step E-3, the third organic solvent or fourth solvent can be used. Further, as the extraction method and the extraction conditions, those in the step B-2 can be employed. The fullerene can be recovered by solid-liquid separation such as filtration.

(Step E-4 (crystallization))

Another preferred embodiment of the step E is a step of crystallizing fullerene from the extract (D-2 extract) having dissolved therein the mixture of fullerene and polycyclic aromatic hydrocarbons as obtained by the step D-2 and recovering and separating the fullerene.

As the crystallization method, the D-2 extract may be concentrated while heating, to a saturated state and then cooled. At this time, it is advisable to add a fullerene such as C60 to the D-2 extract as a seed crystal because the crystallization takes place more easily.

If carbon-based polymeric component is contained in the D-2 extract even in a small amount, it will precipitate by the crystallization. Accordingly, it is advisable that before conducting the crystallization, the third organic solvent or fourth solvent be added to the D-2 extract to such an extent that fullerene will not precipitate the carbon-based polymeric component to precipitate and remove. At this time, it is preferable that the third organic solvent or fourth solvent added be distilled off after the removal of carbon-based polymeric component and then the crystallization be conducted.

A method for fractionation of the fullerene precipitated by the crystallization is not particularly limited. Filtration may be conducted after fractionating the precipitate by centrifugation, only centrifugation may be conducted or only filtration may be conducted. Thus, the fractionation method can properly be selected. Polycyclic aromatic hydrocarbons will remain in the D-2 extract after the crystallization.

(Fullerene)

The fullerene separated and recovered by the first or second separation method is, even if it is a fullerene obtained by the combustion method or the thermal cracking method, a fullerene with a low content of polycyclic aromatic hydrocarbons and can be used in various applications. The content of the polycyclic aromatic hydrocarbons in the resulting fullerene is 1,000 ppm or less, preferably 800 ppm or less, more preferably 300 ppm or less, especially preferably 200 ppm or less, further preferably 100 ppm or less, most preferably 50 ppm or less. The lower the content of the polycyclic aromatic hydrocarbons, the higher the safety of the fullerene. In addition, the properties of the fullerene per se are improved. Thus, it is preferable. For example, if the fullerene is modified with various functional groups, a modified product will be effectively obtained, and effects such as reduction of a load exerted on the isolation process in isolating each product from $C_{60}$ and $C_{70}$ can also be expected.

The carbon number of the fullerene produced by the invention is not particularly limited so long as it has a fullerene structure. It is usually a fullerene having a molecular structure with the carbon number of 60 to 120, especially a fullerene of which the structural carbon number is relatively small, specifically $C_{60}$ to $C_{84}$. Among others, the total content of $C_{60}$ and $C_{70}$ of all fullerenes is preferably 50% or more, more preferably 60% by weight or more, further preferably 70% by weight or more, especially preferably 80% by weight or more.

In the fullerene obtained by the combustion method in the invention, the higher the content of $C_{60}$ in all the fullerenes, the better. The content is preferably 50% by weight, more preferably 70% by weight or more, especially preferably 80% by weight or more.

Higher fullerenes over $C_{70}$ which are collected has not been known well with respect to its usefulness. However, there is a high possibility that the usefulness increases through studies in future. Thus, it can be quite useful in future to recover higher fullerenes in combination with $C_{60}$ and $C_{70}$ as the fullerene in the invention.

If higher fullerenes are removed from the fullerene produced in the invention to increase the content of $C_{60}$ and $C_{70}$, they can be separated using a property that higher fullerenes are sparingly soluble in various organic solvents in comparison to $C_{60}$ and $C_{70}$.

If a single compound of $C_{60}$ or C70 is desired to be obtained, the fullerene obtained by the process of the invention can be separated into each fullerene type by gas chromatography or the like.

(Use)

Since C60 and C70 are relatively stable in the fullerene, they are quite useful industrially in the field of coatings, battery materials, insulation materials, lubricants, cosmetics and the like. In the fullerene obtained by the combustion method in the invention, if the contents of these fullerenes are high, the properties of these fullerenes can be exhibited advantageously.

(Polycyclic aromatic hydrocarbons)

The polycyclic aromatic hydrocarbons separated and recovered by the first or second separation method can be formed into fullerene by dehydrogenation and polymerization. Thus, they can be used as a part of the starting material used in the combustion method or the thermal cracking method.

The polycyclic aromatic hydrocarbons or the carbon-based polymeric component separated and recovered by the first or second separation method can also be used as a part of the fuel employed in the combustion method or the thermal cracking method.

The polycyclic aromatic hydrocarbons separated and recovered by the first or second separation method can be reused as a heat raw material required for sublimation in the step B-1, C-1, D-1 and E-1. That is, in the sublimation device of each of these steps, combustion heat can be used as at least a part of the heat source for a sublimation heat.

If the polycyclic aromatic hydrocarbons separated and recovered by the first or second separation method is burned within the sublimation device, it is preferable that the polycyclic aromatic hydrocarbons be dissolved in another organic solvent or mixed with a gas for combustion. Examples of the gas and the solvent used include aliphatic hydrocarbons such as methane, ethane, propane, butane, pentane, hexane, heptane and octane, and aromatic hydrocarbons such as benzene, toluene, xylene, trimethylbenzene and tetralin.

As the heat source of the sublimation device, electricity may be used in combination with the combustion heat. However, it is preferable to use only the combustion heat as the heat source.

Since the polycyclic aromatic hydrocarbons separated and recovered by the first or second separation method can be used as a part of the starting material subjected to the combustion method or the thermal cracking method or a part of the heat raw material for the sublimation, the energy loss can be suppressed, and the discharge of the polycyclic aromatic compounds out of the system of the process of the invention can be prevented.

When an inactive gas is used in the first or second separation method, the inactive gas after recovered is discharged to ambient atmosphere or reused by being recycled.

[Effects]

As stated above, if the process for producing fullerene in the invention is employed, sublimation, extraction or both of them are used in consecutively separating the three components, fullerene, polycyclic aromatic hydrocarbons and carbon-based polymeric component. Therefore, fullerene can be purified in large quantities in comparison to the column separation.

(Specific step example 1 ((step D-2) and (step E-4))

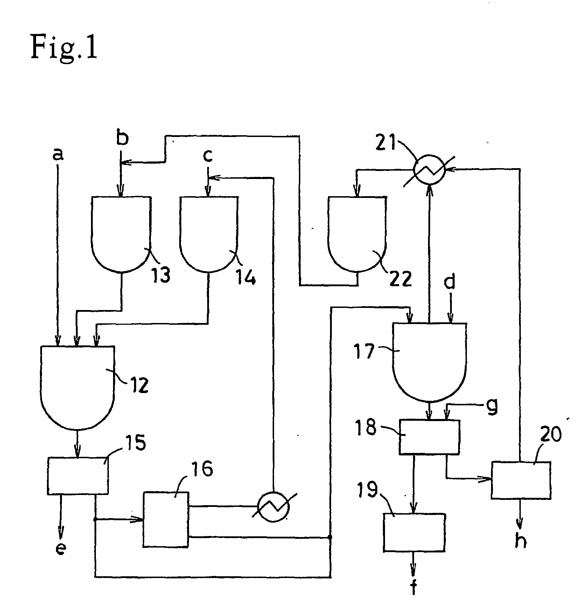

A specific step example 1 of performing the step D-2 and the step E-4 is described with reference to Fig. 1.

To begin with, as the first step, a fullerene-containing mixture a is charged into an extraction-crystallization bath 12, and a second organic solvent b is added thereto from a second organic solvent bath 13 to mix them. Then, an extract in which fullerene and the like-extracted is obtained.

As the fullerene-containing mixture a, a product obtained by an arbitrary method can be used. It is a fullerene-containing carbon-based polymeric substance containing graphite, carbon black and the like, and/or a fullerene concentrate obtained by removing therefrom a part of graphite, carbon black and the like.

The fullerene concentrate is a substance obtained by concentrating the fullerene from the fullerene-containing mixture by various methods, and its concentration method is not particularly limited. Examples thereof include a fullerene sublimate obtained from fullerene-containing mixture by the sublimation method (method by the step D-1), fullerene-containing residue obtained by subjecting a fullerene solution formed through solvent extraction to evaporation to dryness (residue in the step D-2), a fullerene-containing solid matter obtained by subjecting a fullerene-containing sooty substance to column chromatography, a mixture of them, and the like.

The method for producing the fullerene-containing mixture a is arbitrary as stated above. A product synthesized by various known methods or a mixture of carbon-based polymeric components obtained by a plurality of methods can be used.

As the extraction device, a stirring/mixing bath can preferably be used. The extraction/crystallization bath 12 which is a stirring/mixing bath is used here, but an arbitrary device can be used. In the extraction, the pressure in the container is not particularly limited, and the extraction can be conducted at normal pressure. The temperature in the extraction in the extraction/crystallization bath 12 is, for example, from 1 to 90°C, preferably from 15 to 40°C, especially preferably from 25 to 35°C in view of extraction efficiency. However, since the extraction efficiency is less dependent on the temperature, it is advantageous, in view of energy cost, to conduct the extraction at normal temperature.

With respect to the extraction time, it is advisable to conduct the extraction for 1 to 60 minutes, preferably 20 to 40 minutes. Longer time is unnecessary. Since the extraction time does not influence the extraction efficiency so much, it can properly be selected. Further, it is advisable that the extraction is conducted, as required, while applying an ultrasonic wave or the like to the extract to shorten the extraction time.

Regarding the amount of the aromatic hydrocarbon used as the extraction solvent in this specific step example 1, a range is preferable in which the volume of the extraction solvent used in the extraction and the weight of the fullerene-containing sooty substance before the extraction satisfy the following formula:

Weight of fullerene-containing sooty substance/volume of extraction solvent = 2 to 133 [mg/mL]

It is especially preferable that this value is from 33 to 133 [mg/mL]. If the volume of the extraction solvent is too large, the extraction solvent is used in large quantities, resulting in increased cost. Meanwhile, if the volume of the extraction solvent is too small, the fullerene-containing sooty substance as a fullerene starting material is not satisfactorily contacted with the extraction solvent, so that the extraction might not be conducted satisfactorily.

The polycyclic aromatic hydrocarbons and the fullerene containing higher fullerene in the fullerene-containing mixture are extracted with the second organic solvent b in the extraction/crystallization bath 12, and a carbon-based polymeric substance e is suspended or precipitated as an impurity.

In the second step, the third organic solvent or fourth solvent c is added to the extract containing the polycyclic aromatic hydrocarbons and the fullerene containing higher fullerene as obtained in the first step from a poor solvent bath 14 while being stirred to precipitate higher fullerene and polycyclic aromatic hydrocarbons e (hereinafter referred to as "a carbon-based polymeric component e"). Then, the polycyclic aromatic hydrocarbons e, etc. are fractionally separated from the solution. If one desires to collect higher fullerene, the resulting solution is subjected to the third step. Since a large amount of higher fullerene is contained in the carbon-based polymeric component e fractionated as insoluble matters, it is advisable to collect higher fullerene without removal.

The addition amount of the third organic solvent or fourth solvent c is preferably 0.1 to 3 times by weight, more preferably 0.5 to 2 times by weight per part with respect to one part by weight of the second organic solvent used in the first step. If the addition amount is too small, impurities would not precipitate as insoluble matters. If it is too large, fullerene might precipitate together. The addition method is arbitrary. It is especially preferable to gradually add the solvent at a rate of 20 to 200 mL/min.

After the third organic solvent or fourth solvent has been added, the solution containing carbon-based polymeric component e, etc. is allowed to stand still as required. By allowing to stand still, the fractionation (for example, filtration) of the carbon-based polymeric component e, etc. is efficiently conducted advantageously.

With respect to the fractionation method of the carbon-based polymeric component e, etc. which is performed after allowing to stand still, the precipitate was fractionated with a centrifugal separator 15, and then filtrated in Fig. 1. However, only centrifugation or only filtration will do. The fractionation method may properly be selected. In the filtration, it is advisable to use a filter having an opening diameter of 0.1 to 1 $\mu$m, preferably 0.4 to 0.6 $\mu$m. At this time, the filtration can efficiently be conducted by vacuum or pressure filtration. For example, the vacuum filtration is preferably conducted by reducing the pressure to $1 \times 10^2$ to $3 \times 10^4$ Pa, especially from $5 \times 10^3$ to $2 \times 10^4$ Pa. If the degree of vacuum is high, a high-performance pump is required. This increases the cost. If the degree of vacuum is low, the filtration would not proceed. Thus, these are disadvantageous. In the pressure filtration, the pressure is preferably $1.5 \times 10^5$ to $5 \times 10^5$ Pa, more preferably $1.5 \times 10^5$ to $2.5 \times 10^5$ Pa. If the pressure is too high, a device (container) having a high pressure resistance has to be used. This increases the cost. If the pressure is too low, the filtration might not proceed satisfactorily. If alcohols are added as the third organic solvent or fourth solvent, the viscosity of the system is decreased, and filterability will be good.

Consequently, carbon-based polymeric component e insoluble in the second organic solvent is selectively removed from the fullerene-containing mixture a as an insoluble matter, and a fullerene f and polycyclic aromatic hydrocarbons h are dissolved in the solution from which the carbon-based polymeric component e is fractionally removed (filtrate containing the third organic solvent or fourth solvent).

Next, in the third step, the solution obtained in the second step is fractionally distilled with a poor solvent fractionator 16 to remove the third organic solvent or fourth solvent. Here, the poor solvent fractionator 16 is a device for fractionally distilling the third organic solvent or fourth solvent and the second organic solvent by a difference in boiling point. For example, an arbitrary device such as a device which overheats a messflask or the like from below is used. It is advisable to conduct the fractional distillation at a distillation temperature of approximately the boiling point of a polar solvent, especially 50 to 100°C under normal pressure. For example, the boiling point of methanol is 64°C, and that of i-propanol is 84°C. Meanwhile, the boiling point of tetralin is approximately 200°C, and that of 1,2-trimethylbenzene is approximately 170°C. Accordingly, the polar solvent can substantially be removed or decreased with ease. The third organic solvent or fourth solvent removed can be recovered and purified, returned to the poor solvent bath 14 for reuse in the second step. A method for removal of the polar solvent is arbitrary. The solution (filtrate containing the third organic solvent or fourth solvent) is directly charged into a rotary distillation dryer 17 of a next step, not using the poor solvent fractionator 16 to evaporate the third organic solvent or fourth solvent. The thus-obtained solution is hereinafter referred to as a filtrate.

Next, in the fourth step, the filtrate obtained in the third step is charged into the rotary distillation dryer 17, or more than 0 to 10% by weight, preferably 0.1 to 7% by weight, more preferably 0.1 to 5% by weight, with respect to the extracted fullerene, of a seed crystal d (for example, $C_{60}$) is added to the filtrate from which the polar solvent has been evaporated with the rotary distillation dryer 17. Charging no seed crystal d is also included in the invention. If the amount of the seed crystal is too small, the crystallization will hardly proceed. If it is too large, the cost will increase.

The type and the size of the crystal of the desired fullerene vary with the type, size and amount of the seed crystal charged. Accordingly, the size, amount and type of the crystal charged are properly selected to comply with the purpose.

Then, the extract is subjected to vacuum evaporation, that is, one concentration method, to form a saturated solution. The pressure is $7 \times 10^3$ Pa or less, preferably from $1 \times 10^3$ to $3 \times 10^3$ Pa. If the degree of vacuum is too low, the evaporation will take long time. If the degree of vacuum is too high, a high-performance pump is required. This increases the cost. The temperature is 70 to 100°C, preferably 80 to 90°C. If the temperature is too low, the evaporation will take longer time. If the temperature is too high, the energy cost increases.

Subsequently, cooling crystallization is conducted. The pressure may be normal pressure. The temperature may be decreased to normal temperature. The greater the difference between this temperature and the temperature in evaporation, the larger the difference in solubility.

The solubility in the aromatic hydrocarbon as the extraction solvent is decreased by concentration/cooling, and substances having a lower solubility in extraction solvent are crystallized, so that crystals of the fullerene made mainly of $C_{60}$, $C_{70}$, $C_{76}$, $C_{78}$, $C_{82}$ and $C_{84}$ would precipitate. This is centrifuged with a centrifugal separator 18, and the centrifuged precipitate is washed with a washing liquid g, and dried with a dryer 19 to obtain fullerene crystals f.

As the washing liquid, the third organic solvent or fourth solvent used above is preferably used. If the same solvent is used, it can be recovered, returned to the poor solvent bath 14, and reused.

The centrifuged solution contains the extraction solvent, the washing liquid and the polycyclic aromatic hydrocarbons having a high solubility in the extraction solvent. The washing liquid and the extraction solvent are evaporated and recovered or removed by fractionally distilling the centrifuged solution or drying it with a dryer. The polycyclic aromatic hydrocarbons h are obtained as a precipitate. This precipitate is dried with a dryer 20, and removed as an impurity.

The second organic solvent, which is evaporated extraction solvent, is cooled with a cooler 21, liquefied, stored in a storage bath 22, returned to the extraction solvent bath 13, and reused by being recycled.

In the foregoing process, high-purity useful fullerene f can be recovered from fullerene-containing mixture a (including fullerene concentrate) efficiently by simple operation and step.

In this process, the useful fullerene f is centrifuged, and recovered in the form of a mixture. $C_{60}$, $C_{70}$, $C_{76}$, $C_{78}$, $C_{82}$ and $C_{84}$ which are useful fullerenes can be crystallized and collected either singly or in combination by controlling the solubility of fullerene in the extraction solvent in the second and fourth steps, especially the fourth step, namely controlling the concentration conditions, the temperature conditions and the like. This arrangement is also included in the process of the invention.

The useful fullerene recovered can be adjusted by varying the type, size, amount and the like of the seed crystal.

In this embodiment, the same solvent was used as the second organic solvent and the third organic solvent or fourth solvent in all the steps, and was reused by recycling. However, an arrangement in which different solvents are used as the second organic solvent and the third organic solvent or fourth solvent in the respective steps is also included in the process of the invention. The fullerene f recovered in this embodiment is further subjected to fractionation which has been so far used, such as column chromatography, whereby a higher-purity single fullerene f can easily be fractionated without damage of a column which has so far occurred.

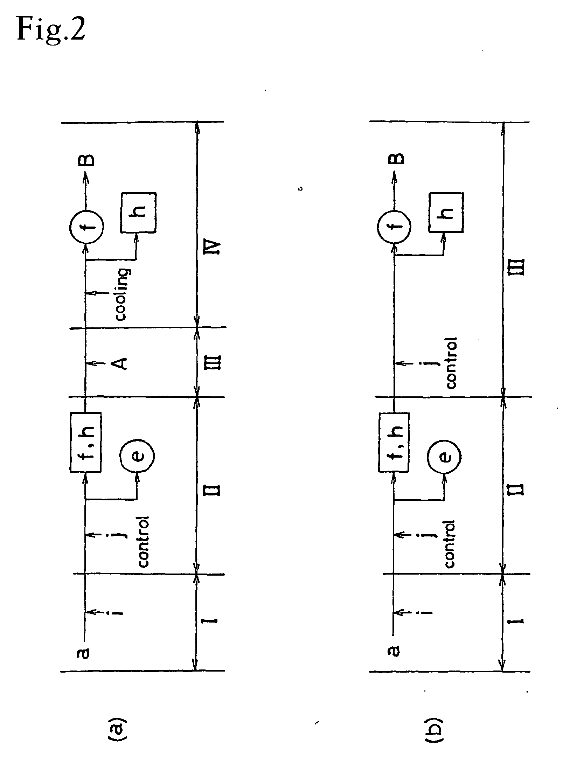

Fig. 2(a) briefly describes the foregoing process using a specific example. The process comprises the steps of mixing a fullerene-containing mixture a with tetralin i, an example of the extraction solvent including the second organic solvent to obtain an extract (first step (I in Fig. 2)), adding methanol j, an example of the third organic solvent or fourth solvent, to the extract to precipitate carbon-based polymeric component e, etc. which are then fractionally removed from the solution (second step (II in Fig. 2)), substantially removing the third organic solvent or fourth solvent (methanol) in the solution (filtrate containing the third organic solvent or fourth solvent) by distillation procedure A (third step (III in Fig. 2)), and the fourth step of cooling the solution (filtrate) obtained through the third step to precipitate the fullerene f (third step (IV in Fig. 2)). In Fig. 2, h indicates polycyclic aromatic hydrocarbons. The above-obtained fullerene f may further be subjected to crystallization treatment B.

(Specific step example 2 ((step D-2) and (step E-2))

The specific step example 2 of conducting the step D-2 and the step E-2 is described using Fig. 1.

Since the first step and the second step are substantially the same as the foregoing process, a detailed description thereof is omitted.

In the third step, the solution obtained in the second step (filtrate containing the third organic solvent or fourth solvent) is charged into the rotary distillation dryer 17 without being applied to the poor solvent separator 16, and the third organic solvent or fourth solvent is further added from the poor solvent bath 14. The amount of the solvent to be added is 3 to 7 times by weight with respect to the extraction solvent. The solubility in the extraction solvent thereby decreases, and the aimed fullerene is precipitated as crystals. If the amount is too small, the crystals of the fullerene would not precipitate. If it is too large, the loss of the cost results. More than 0 to 10% by weight, preferably 3 to 7% by weight, with respect to the extracted fullerene, of a seed crystal d (for example, $C_{60}$) may be added thereto. An arrangement in which no seed crystal is charged into the rotary distillation dryer 17 filled with a polar solvent-containing filtrate is still included in the invention. However, if no seed crystal is charged or the amount of the seed crystal is too small, the crystallization will hardly proceed. If the amount of the seed crystal is too large, the cost increases.

Since the type and the size of the crystal of the fullerene f vary with the type, size and amount of the seed crystal d charged, the size, amount and type of the crystal to be charged are selected to comply with the purpose.

The precipitated fullerene f is washed with a washing liquid, and centrifuged with the centrifugal separator 18. The crystals of the separated fullerene f are dried with the dryer 19, and collected.

The separated solution obtained by centrifugation comprises the second organic solvent, the third organic solvent or fourth solvent, the washing liquid and the like. The same third organic solvent or fourth solvent is used as the washing liquid, whereby it can be recovered, and reused by recycling. The third organic solvent or fourth solvent in the separated solution is boiled up to approximately its boiling point, evaporated, recovered, returned to the poor solvent bath 14, and reused in the second and third steps by being recycled.

The second organic solvent as the extraction solvent in the separated solution is evaporated at reduced pressure and elevated temperature, cooled in the cooler 21 for liquefaction, stored in the storage bath 22, then returned to the extraction solvent bath 13, and reused as in the first embodiment.

Fig. 2(b) briefly describes the foregoing process using a specific example. It comprises the steps of mixing the fullerene-containing mixture a with tetralin i, an example of the second organic solvent, to obtain an extract (first step (I)), adding methanol j, an example of the third organic solvent or fourth solvent, to the extract to fractionate the extract into a solution (filtrate containing the third organic solvent or fourth solvent) and the carbon-based polymeric component e, etc. (second step (II)), and further adding methanol j to precipitate the fullerene f (third step (III)). In Fig. 2(b) as well, h indicates polycyclic aromatic hydrocarbons as in Fig. 2(a).

In the process for producing the fullerene f according to the specific step example 2, the fullerene f was recovered in the form of a mixture. However, as in the specific step example 1, an arrangement in which the type and amount of the fullerene crystallized and precipitated are controlled by controlling the solubility in the extraction solvent in the second and third steps or selecting the seed crystal d in the third step is also included in the process of the invention.

In this manner, one or more fullerenes can be precipitated and collected. Further separation such as column chromatography, fractional recrystallization or inclusion of fullerene is added to the process of the invention, whereby a single fullerene can be produced more efficiently than in the past.

In the specific step examples 1 and 2, fullerene is collected in the state in which it contains an oxide of the fullerene. However, this oxide can fractionally be removed from the fullerene by another arbitrary method. Even though the oxide is not fractionally removed, the amount of the oxide is small, and it does not pose a problem.

By the foregoing process for producing the fullerene according to the specific step example 2, high-purity fullerene can be recovered efficiently from fullerene-containing mixture or fullerene concentrate by simple operation and step. Moreover, since the extraction solvent and the poor solvent can both be recovered and reused by recycling. Thus, this process is good in view of the cost.

(Specific step example 3 (step D-2) and (step E-2))

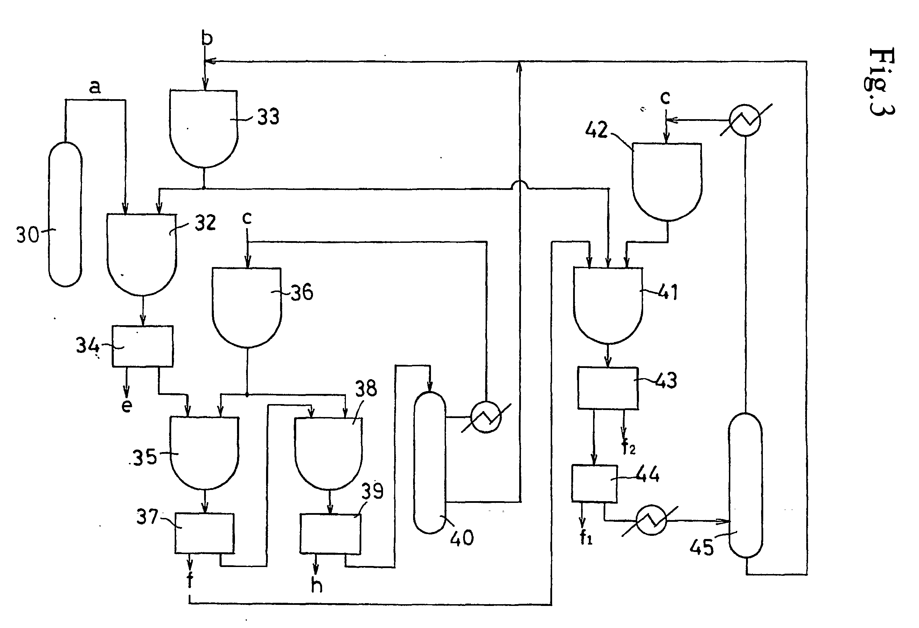

The specific step example 3 is described using Fig. 3.

To begin with, in the first step, the fullerene-containing mixture a is collected from a combustion furnace 30, and charged into an extraction bath 32. The second organic solvent b (first extraction solvent) is added and mixed thereto from an extraction solvent bath 33 to obtain an extract with the fullerene extracted.

As an extraction device, a stirring/mixing bath may preferably be used. Here, the extraction bath 32 as a stirring/mixing bath is used. However, an arbitrary device may be used. In the extraction, the pressure in the container is not particularly limited, and the extraction may be conducted at normal pressure. The temperature in the extraction in the extraction bath 32 is, for example, from 1 to 90°C, preferably from 15 to 40°C, especially preferably from 25 to 35°C in view of extraction efficiency. Since the extraction efficiency is not so dependent on the temperature, it is advantageous, in view of the energy cost, to conduct the extraction at normal temperature.

It is advisable that the amount of the second organic solvent b used as the extraction solvent is in such a range that the volume of the extraction solvent used in the extraction and the weight of the sooty substance before extraction satisfy the following formula.

$$\text{Weight of sooty substance/volume of extraction solvent} = 2 \text{ to } 133$$

$$[mg/mL]$$

It is especially preferable that this value is from 33 to 133 [mg/mL]. If the volume of the extraction solvent is too large, the extraction solvent is used in large quantities to increase the cost. Conversely, if the volume of the extraction solvent is too small, the sooty substance as a fullerene starting material is not satisfactorily contacted with the extraction solvent, so that the extraction might not be conducted satisfactorily.

In the first step, polycyclic aromatic hydrocarbons having a lower molecular weight than $C_{70}$ in the sooty substance and the higher fullerene having a larger carbon number than $C_{60}$, $C_{60}$, $C_{70}$ are extracted with the second organic solvent as the extraction solvent, and dissolved. The carbon-based polymeric component e is suspended or precipitated in the extract as an insoluble matter. The extract is centrifuged with a centrifugal separator 34 to remove the carbon-based polymeric component e as the insoluble matter. In the removal of the carbon-based polymeric component e, centrifugation or solid-liquid separation which is ordinarily used, such as filtration may be selected.

Then, in the second step, the extract in which fullerene and the like have been extracted and from which carbon-based polymeric component e has been removed in the first step is charged into a crystallization bath 35, and the third organic solvent or fourth solvent c in which the solubility of $C_{60}$ is 10 mg/L or less is added from a poor solvent bath 36 with stirring.

The addition amount of the third organic solvent or fourth solvent c is from 4 to 5 times by weight with respect to weight of the second organic solvent b1 used in the first step. The range of from 3 to 7 times by weight is preferable because polycyclic aromatic hydrocarbons having a lower molecular weight than $C_{60}$ are not precipitated, and $C_{60}$, $C_{70}$ and higher fullerene are precipitated in the range. The addition method is arbitrary, and gradual addition is preferable.

The third organic solvent or fourth solvent c is added by specific controll, whereby the solubility of fullerene in the extraction solvent decreases, $C_{60}$, $C_{70}$ and higher fullerene having a low solubility are extracted, and polycyclic aromatic hydrocarbons having a lower molecular weight than $C_{60}$ remain in the solution.

The solution in which $C_{60}$, $C_{70}$ and higher fullerene have precipitated is allowed to stand still for from 1 to 30 minutes, preferably from 5 to 15 minutes. Allowing to stand still is preferable because the fractionation (for example, filtration) of the insoluble matters is thereby conducted efficiently.

The insoluble matters ($C_{60}$, $C_{70}$ and higher fullerene) are fractionated with a centrifugal separator 37 after being allowed to stand still. As the fractionation method, filtration or both of centrifugation and filtration are available. The fractionation method can properly be selected. It is advisable to conduct the filtration using a filter having an opening diameter of from 0.1 to 1 $\mu$m, preferably from 0.4 to 0.6 $\mu$m. At this time, the filtration can efficiently be conducted by vacuum filtration or pressure filtration. The vacuum filtration is preferably conducted by setting the degree of vacuum to from $1 \times 10^2$ to $3 \times 10^4$ Pa, especially from $5 \times 10^3$ to $2 \times 10^4$ Pa. If the degree of vacuum is high, a high-performance pump is required. This increases the cost. If the degree of vacuum is low, the filtration would not proceed. The degree of pressure is preferably from $1.5 \times 10^5$ to $5 \times 10^5$ Pa. If the degree of pressure is too low, the filtration is delayed. If the degree of pressure is too high, cracking of a cake occurs, so that washing is not conducted well.

Here, higher fullerene of more than $C_{70}$ has not been known well at present with respect to its usefulness. However, its usefulness may increase through studies in future. Thus, it may be quite useful in future to recover higher fullerene in combination with $C_{60}$ and $C_{70}$ in this step as useful fullerene.

The filtrate from which $C_{60}$, $C_{70}$ and higher fullerene have been removed is charged into a second crystallization bath 38 fitted with a stirrer (it is not necessarily required), a poor solvent is added from the poor solvent bath 36, and the mixture is stirred. The polycyclic aromatic hydrocarbons h dissolved are precipitated as an insoluble matter, and impurities are removed by centrifugation with a centrifugal separator 39. The filtrate having dissolved therein the second organic solvent b and the third organic solvent or fourth solvent c is fractionated into the second organic solvent b and the third organic solvent or fourth solvent c with a poor solvent fractionator 40, and they are recovered in the extraction solvent bath 33 and the poor solvent bath 36, and reused by recycling.

Next, in the third step, the fullerene f containing $C_{60}$, $C_{70}$ and higher fullerene as collected in the second step is charged into a redissolution extraction bath 41 fitted with a stirrer, and the second organic solvent b (second extraction solvent) is charged therein for redissolution. Here, the second extraction solvent is the same as the first extraction solvent. However, using a different solvent is also included in the invention. If the first extraction solvent is the same as the second extraction solvent, the device is simplified, and the solvent can be reused by recycling. Thus, the cost is industrially reduced advantageously.

Then, in the fourth step, a controlled amount of the third organic solvent or fourth solvent is charged to the solution which is redissolved (referred to as the redissolved solution) from a poor solvent bath 42, and the mixture is stirred to precipitate higher fullerene having a low solubility in the extraction solvent to obtain a solution having $C_{60}$ and $C_{70}$ dissolved therein. Here, the amount of the poor solvent to be added is from 0.5 to 2 times by weight with respect to the redissolved solution. The weight in which higher fullerene $f_2$ precipitates but fullerene $f_1$ comprising $C_{60}$ and $C_{70}$ little precipitates, namely from 0.1 to 3 times by weight with respect to the redissolved solution is also available.

The higher fullerene $f_2$ precipitated is fractionally removed by being centrifuged with a centrifugal separator 43. When using the higher fullerene $f_2$, it is washed with a washing liquid, and collected.

The device and the process used in the fourth step may be approximately the same as in the second step except that the addition amount of the third organic solvent or fourth solvent is different.

Then, in the fifth step, the solution of the fullerene $f_1$ comprising $C_{60}$ and $C_{70}$ except the higher fullerene $f_2$ is charged into a dryer 44. The third organic solvent or fourth solvent c such as lower alcohols and the second organic solvent b in the solution are evaporated with the dryer 44, whereby the fullerene $f_1$ comprising $C_{60}$ and $C_{70}$ can be collected. The third organic solvent or fourth solvent c and the second organic solvent b which have evaporated are fractionated with a poor solvent fractionator 45, and recovered into the poor solvent bath 42 and the extraction solvent bath 33, respectively. The precipitated fullerene $f_1$ comprising $C_{60}$ and $C_{70}$ is washed with a washing liquid. However, an arrangement in which it is not washed is also included in the invention. The third organic solvent or fourth solvent c can be employed as the washing liquid used in the fourth step and the fifth step. Thereby they are recovered and reused by being recycled.

The dryer 44 used here is preferably a rotary distillation dryer. However, a dryer which is a non-rotary type is also available. A seed crystal (for example, $C_{60}$) may be added to this dryer. The addition of the seed crystal provides a fullerene having a large crystal size.

The solution may be heated to substantially remove the poor solvent in the solution by evaporation and the residue is then heated under reduced pressure to evaporate the extraction solvent in the solution.

With the process for producing the fullerene according to the specific step example 3, high-purity useful $C_{60}$ and $C_{70}$ can be recovered from fullerene-containing mixture a (containing the fullerene concentrate) efficiently by simple operation and steps.

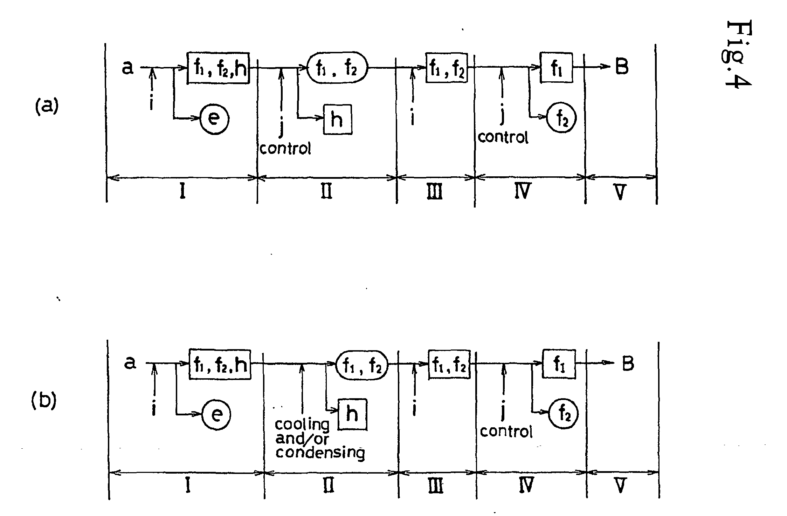

Fig. 4(a) briefly describes the process for producing fullerene according to the specific step example 3 using a specific example.

The specific step example 3 comprises steps of mixing a fullerene-containing mixture a such as a combustion product with tetralin i, which is an example of the second organic solvent (first extraction solvent), removing the insoluble carbon-based polymeric component e to obtain an extract (first step ((I) in Fig. 4)), adding a controlled amount of methanol j, which is an example of the third organic solvent or fourth solvent, to the extract after the removal to precipitate the fullerene $f_1$ comprising $C_{60}$ and $C_{70}$ and higher fullerene $f_2$ as insoluble matters (second step ((II) in Fig. 4)), redissolving the precipitated insoluble matters with tetralin i, which is an example of the second extraction solvent (third step ((III) in Fig. 4)), adding a controlled amount of methanol j j to the redissolved solution to precipitate and separate the higher fullerene $f_2$ (fourth step ((IV) in Fig. 4)), and removing methanol j and tetralin i in the separated solution from which the higher fullerene $f_2$ has been removed by evaporation to precipitate the fullerene $f_1$ comprising $C_{60}$ and $C_{70}$ (fifth step ((V) in Fig. 4)).

(Specific step example 4 ((step D-2) and (step E-4))

The specific step example 4 is described using Fig. 3.

Since the first step, the third step, the fourth step and the fifth step are substantially the same as in the specific step example 3, the detailed description thereof is omitted, and only the second step is described below. Further, since the fullerene-containing mixture a, the first and second extraction solvents including the second organic solvent b, the third organic solvent or fourth solvent c are also the same as in the specific step example 3, the detailed description thereof is omitted.

In the second step, the extract obtained in the first step is not shifted to the second crystallization bath 38 but is cooled in the crystallization bath 35 while evaporating the aromatic hydrocarbon as the second organic solvent which is the extraction solvent in the extract, whereby the fullerene f comprising $C_{60}$, $C_{70}$ and higher fullerene are precipitated while the polycyclic aromatic hydrocarbons h having a lower molecular weight than $C_{60}$ is dissolved in the solution.

As for a specific method, the extract is first vacuum-distilled to form a saturated solution. The pressure is more than 0 to $5 \times 10^3$ Pa, preferably from $5 \times 10^2$ to $3 \times 10^3$ Pa. If the degree of vacuum is too low, evaporation takes longer time. If the degree of vacuum is too high, a high-performance pump is required. This increases the cost. The temperature is from 70 to 100°C, preferably from 80 to 90°C. If the temperature is too low, evaporation takes long time. If it is too high, the energy cost increases.

Subsequently, cooling crystallization is conducted. The pressure may be normal pressure. The temperature may be normal temperature. The greater the difference between this temperature and the temperature in evaporation, the better because a difference in solubility is provided. The solubility in the aromatic hydrocarbon as the extraction solvent decreases by cooling under reduced pressure, and substances having a lower solubility in extraction solvent precipitate one after another. Crystals of the fullerene f comprising $C_{60}$, $C_{70}$ and higher fullerene than $C_{70}$ precipitate.

In the specific step example 4, the extract is vacuum-distilled to form a saturated solution, and the solution is then cooled to decrease the solubility of the extract to such an extent that the fullerene f comprising $C_{60}$, $C_{70}$ and higher fullerene than $C_{70}$ are precipitated with the polycyclic aromatic hydrocarbons having lower molecular weight than $C_{60}$ dissolved in the solution. However, it may be conducted by only distillation or only cooling while controlling distillation or cooling.

The crystals of fullerene are obtained by substantially the same steps as the third, fourth and fifth steps of the specific step example 3.

In Fig. 4(b), the process for producing fullerene according to the second embodiment of the invention is briefly described using the specific example.

It comprises the steps of mixing the fullerene-containing mixture a containing the combustion product with tetralin i, which is an example of the first extraction solvent including the second organic solvent, to remove insoluble carbon-based polymeric component e and obtain an extract (first step (I)), and evaporating tetralin i by distilling the extract and/or cooling the extract to precipitate fullerene $f_1$ comprising $C_{60}$ and $C_{70}$ and higher fullerene $f_2$ than $C_{70}$ (second step (II)). At this time, the polycyclic aromatic hydrocarbons h remain dissolved. It comprises the steps of redissolving a precipitate containing $f_1$ and $f_2$ with tetralin i, which is an example of the second extraction solvent (third step (III)), adding a controlled amount of methanol j, which is an example of the third organic solvent or fourth solvent, to the redissolved solution to precipitate higher fullerene $f_2$ (fourth step (IV)), and evaporating methanol j and tetralin i in the separated liquid from which higher fullerene $f_2$ has been removed, to precipitate fullerene $f_1$ comprising $C_{60}$ and $C_{70}$ (fifth step (V)).

In the process for producing the fullerene according to the specific step examples 3 and 4, it is also possible that the fullerene $f_1$ comprising $C_{60}$ and $C_{70}$ and higher fullerene $f_2$ as precipitated in the second step are collected to stop the process.

Examples

The invention is illustrated more specifically below by referring to Examples.

(Example 1) ((Step D-2) + (Step E-4))

10.3 g of a fullerene-containing mixture (containing 1.13 g of $C_{60}$ to $C_{96}$ as fullerenes, 9.17 g of carbon black) which had been prepared using fullerenes and a carbon-based polymeric component was charged into a 1-liter messflask, and 286.16 g of tetralin was added thereto. The mixture was extracted with stirring at normal temperature for 30 minutes while applying an ultrasonic wave. Subsequently, 399.6 g of ethanol was added with stirring, and the mixture was allowed to stand still for 5 minutes. Then, 76 g of the suspension was charged into each centrifuge tube for centrifugation. Thereafter, vacuum filtration was conducted with a filter of 0.45 μm. The resulting solution was applied to a rotary evaporator to evaporate ethanol. Then, the pressure was decreased and the temperature was increased to evaporate tetralin so that the solution was saturated. 0.0099 g of $C_{60}$ was added as a seed crystal, and the mixture was cooled to normal temperature to obtain 95.1754% of a fullerene mixture.

(Example 2) ((Step E-2))

10.2 g of a fullerene-containing mixture (a total of $C_{60}$ to $C_{80}$ as fullerenes was 11.1% by weight) which had been prepared using fullerenes and polycyclic aromatics was charged into a 1-liter eggplant type flask, and 286 g of tetralin was added thereto. The mixture was extracted with stirring at normal temperature for 30 minutes while applying an ultrasonic wave. Then, 76 g of the extract was charged into each centrifuge tube for centrifugation. To the resulting extract was added 1,000 g of ethanol with stirring, and the mixture was allowed to stand still for 5 minutes to precipitate an insoluble matter. The solution having the insoluble matter precipitated therein was centrifuged, and vacuum filtration was then conducted with a filter of 0.45 $\mu$m. The resulting precipitate was charged into a 100-milliliter eggplant type flask, and 10.0 g of tetralin was added to redissolve the precipitate. 14.3 g of ethanol was added to the redissolved solution while stirring, and the mixture was allowed to stand still for 5 minuets to precipitate an insoluble matter. The solution having the insoluble matter precipitated therein was centrifuged, and the precipitate was washed with a washing liquid, and then dried. 0.705 g of fullerene crystals were obtained which contained 67.9% by weight of $C_{60}$, 28.1% by weight of $C_{70}$ and 4.0% by weight of $C_{76}$ to $C_{84}$.

(Example 3) ((Step D-2) + (Step E-2))

9.311 kg of a fullerene-containing mixture (a total of $C_{60}$ to $C_{80}$ as fullerenes: 12.0% by weight, polycyclic aromatics: 1,775 ppm) which had been prepared using fullerenes and polycyclic aromatics was charged into a 100-liter GL reaction vessel R-501. 87.0 kg of 1,2,4-trimethylbenzene was added thereto, and the mixture was extracted at 40°C for 1 hour with stirring. The mixture was filtered with a GL pressure filter, and a residual solid matter was washed three times while spraying 10 kg of 1,2,4-trimethylbene thereto. The resulting solution was then concentrated to a solution amount of 34.0 kg in a 350-liter GL reaction vessel R-703 at 60°C and 10 torr. 126.0 kg of isopropyl alcohol was added to the concentrate for 2 hours with stirring, and the mixture was aged as such for 1 hour. Subsequently, the crystallized component was filtered with a GL pressure filter, and the residual solid matter was washed once while spraying 28.0 kg of isopropyl alcohol thereto. The resulting solid matter was dried in full vacuum at 190°C. 783.5 g of fullerene crystals comprising 60.7% by weight of C60, 25.3% by weight of C70, 17.8% by weight of C76 to C86 and 196 ppm of polycyclic aromatics.

(Reference Example 1) ((Step D-2))

50.8 g of a mixture comprising a fullerene, polycyclic aromatic hydrocarbons and a carbon-based polymeric component as produced by the combustion method, and 446 g of 1,2,4-trimethylbenzene (TMB) were mixed in a 1-liter conical flask at room temperature. The mixture was dipped in an ultrasonic washer for 30 minutes, stirred with a magnetic stirrer for 30 minutes, and then redipped in an ultrasonic washer for 30 minutes. The resulting slurry was filtered with nitrogen under pressure of 2 kgG using a PTFE membrane filter of 0.5 $\mu$m with a diameter of 142 mm manufactured by ADVANTEC and a pressure filter manufactured by the same company. The filtrate was concentrated, crystallized, and dried at 90°C and 20 Torr using an evaporator manufactured by Buich to obtain 4.81 g of a solid matter (Blank).
For the resulting solid matter, the fullerene was analyzed by liquid chromatography, and the polycyclic aromatic hydrocarbons was analyzed by gas chromatography. The results are shown in Table 1.

(Example 4) ((Step D-2) + (Step E-2))

75 g of a mixture comprising a fullerene, polycyclic aromatic hydrocarbons and a carbon-based polymeric component as produced by the combustion method and 1,500 cc of TMB were mixed in a 2-liter conical flask at room temperature, and dipped in an ultrasonic washer for 30 minutes. The slurry was filtered with nitrogen under pressure of 2 kgG using a PTFE membrane filter of 0.5 $\mu$m with a diameter of 142 mm manufactured by ADVANTEC and a pressure filter manufactured by the same company. 118 g of the filtrate was concentrated to 30 g at 90°C and 20 Torr using an evaporator manufactured by Buich. The solution was charged into a 500-cc separable flask, and stirred with a rotary blade. After the temperature was elevated to 50°C, 125 g of THF was added with a pump for 60 minutes while maintaining the same temperature. After the addition, the mixture was retained for 10 minutes. The solution became slurry. This slurry was filtered in vacuo using a PTFE membrane filter of 0.5 $\mu$m with a diameter of 47 mm manufactured by ADVANTEC. After filtration, the product was washed by further spraying 50 cc of THF. The solid matter separated by filtration was dried at 100°C and 5 Torr using a vacuum dryer.
The resulting solid matter was analyzed by the method described in Reference Example 1. The results are shown in Table 1.

(Example 5) ((Step D-2) + (Step E-2))

75 g of a mixture comprising a fullerene, polycyclic aromatic hydrocarbons and a carbon-based polymeric component as produced by the combustion method and 1,500 cc of TMB were mixed in a 2-liter conical flask at room temperature, and dipped in an ultrasonic washer for 30 minutes. The slurry was filtered with nitrogen under pressure of 2 kgG using a PTFE membrane filter of 0.5 μm with a diameter of 142 mm manufactured by ADVANTEC and a pressure filter manufactured by the same company. 130 g of the filtrate was concentrated, precipitated and dried at 90°C and 20 Torr using an evaporator manufactured by Buich. The solid matter and 156 g of THF were charged into a 200-cc conical flask, and stirred with a magnetic stirrer at 50°C for 70 minutes. The solution became slurry. This slurry was filtered in vacuo using a PTFE membrane filter of 0.5 μm with a diameter of 47 mm manufactured by ADVANTEC. After filtration, the product was washed by further spraying 30 cc of THF. The solid matter separated by filtration was dried at 100°C and 5 Torr using a vacuum dryer.
The resulting solid matter was analyzed by the method described in Reference Example 1. The results are shown in Table 1.

Table 1

| | | Fullerene (wt.%) | Polycyclic aromatic hydrocarbons (ppm) | Recovery (%) |
|---|---|---|---|---|
| Reference Example | 1 | 87.36 | 10,000 | 100 |
| Example | 4 | 91.93 | 289 | 94.9 |
| | 5 | 93.60 | 648 | 98.1 |

The recovery was calculated with the recovery in Reference Example 1 defined as 100%.

(Reference Example 2) ((Step D-2))

0.876 g of a mixture comprising a fullerene and polycyclic aromatic hydrocarbons as produced by the combustion method and 22.9 g of 1,2,4-trimethylbenzene were mixed in a 50 ml screw bottle at room temperature. The mixture was dipped in an ultrasonic washer for 30 minutes. The slurry was filtered under pressure using a disposable PTFE membrane filter of 0.5 μm manufactured by ADVANTEC to separate the fullerene and the polycyclic aromatic hydrocarbons from the mixture. With respect to the filtrate, the fullerene was determined using high-performance liquid chromatography produced by Shimadzu Corporation, while the polycyclic aromatic hydrocarbons were determined using gas chromatography made by Agilent. As a result, the content of polycyclic aromatic hydrocarbons in the mixture of fullerene and polycyclic aromatic hydrocarbons was 5,100 ppm.

(Example 6) ((Step B-1) + (Step C-2))

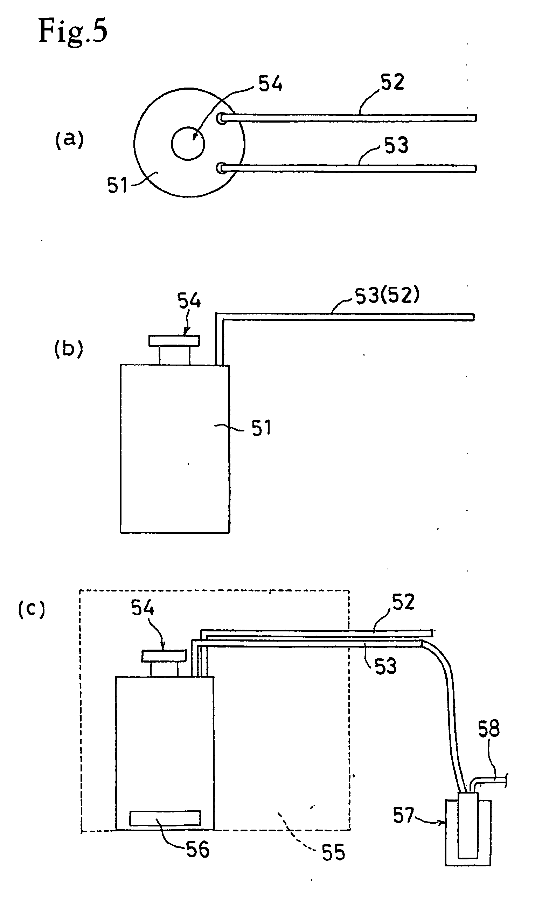

1.02 g of a mixture comprising a fullerene and polycyclic aromatic hydrocarbons as produced by the combustion method was charged into an SUS 304 sublimation device 51 (height 65 cm, width 45 cm) shown in Figs. 5(a) and 5(b), and nitrogen was passed at room temperature and a rate of 100 ml/min for 30 minutes to replace the inside of the device therewith. Subsequently, as shown in Fig. 5(c), the overall sublimation device 51 was put in an electric furnace (muffle furnace) 55. The temperature of the electric furnace 55 was elevated to 500°C, and maintained at 500°C for 2 hours. The temperature gradually lowered to room temperature, 19.9 g of 1,2,4-trimethylbenzene was added, and the entire sublimation device was dipped in an ultrasonic washer for 30 minutes.
The slurry was filtered under pressure using a disposable PTFE membrane filter of 0.5 μm manufactured by ADVANTEC to separate the fullerene and the polycyclic aromatic hydrocarbons from the sooty substance. For the filtrate, the fullerene was determined using high-performance liquid chromatography supplied by Shimadzu Corporation, while the polycyclic aromatic hydrocarbons were determined using gas chromatography supplied by Agilent. As a result, the content of the polycyclic aromatic hydrocarbons in the mixture of fullerene and polycyclic aromatic hydrocarbons was below the measurable limit (at most 100 ppm).

(Reference Example 3) ((Step D-2))

1,838 g of 1,2,4-trimethylbenzene was added to 206.1 g of a mixture of a fullerene, polycyclic aromatic hydrocarbons and a carbon-based polymeric component as produced by the combustion method, and the mixture was dipped in an ultrasonic washer for 30 minutes while stirring. The slurry was filtered under pressure using a membrane filter of 0.55 μm. The filtrate was concentrated to dryness at 89°C and 30 torr using an evaporator manufactured by Buch.

Thereafter, the product was dried with a vacuum dryer at 80°C and 6 Torr for 7 hours to obtain a comparative sample (blank). With respect to the solid matter, the fullerene was determined using high-performance liquid chromatography (HPLC) supplied by Shimadzu Corporation, while polycyclic aromatic hydrocarbons were determined using gas chromatography (GC) supplied by Agilent.

As a result, 8,800 ppm of the polycyclic aromatic compounds was contained in the comparative sample.

(Example 7) ((Step D-2) + (Step E-1))

For the sample produced in Reference Example 3, polycyclic aromatic hydrocarbons were sublimated under the following conditions using the SUS 304 sublimation device (height 65 cm, width 45 cm) shown in Figs. 5(a) and 5(b).

1.118 g of the sample was charged into the sublimation device 51, and nitrogen was passed at a flow rate of 500 ml/min for 30 minutes. Subsequently, the flow rate of nitrogen was changed to 114 ml/min. The overall sublimation device was put into an electric furnace (muffle furnace) 55 as shown in Fig. 5(c). The temperature was elevated to 500°C, and maintained for 2 hours. Thereafter, the temperature was lowered to room temperature. The fullerene in the solid matter remaining within the sublimation device 51, was determined by HPLC supplied by Shimadzu Corporation, and the polycyclic aromatic hydrocarbons by GC supplied by Agilent.

As a result, no polycyclic aromatic compounds were found in the solid matter. That is, the content of the polycyclic aromatic compounds was below the measurable limit, and it was at most 100 ppm.

(Example 8) ((Step B-1) + (Step C-1))

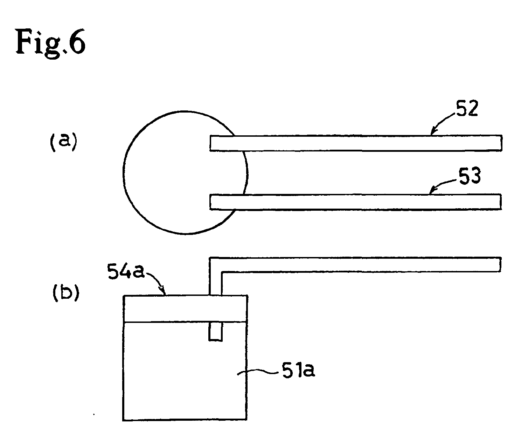

3.16 g of a mixture comprising a fullerene, polycyclic aromatic hydrocarbons and a carbon-based polymeric component as produced by the combustion method was charged into a sublimation device 51a made of quartz glass as shown in Figs. 6(a) and 6(b), and nitrogen was passed at room temperature and a rate of 250 ml/min for 30 minutes to replace the inside of the device therewith. Subsequently, the temperature of an electric furnace was elevated to 500°C, and maintained for 2 hours. The temperature was once lowered gradually to room temperature, and 2.59 g of the solid matter was charged into the same type of the sublimation device. Helium was passed at room temperature and a rate of 220 ml/min for 30 minutes to replace the inside of the device therewith. The temperature of the electric furnace was elevated to 1,000°C, and maintained for 2 hours. Then, the temperature was lowered to room temperature. The solid matter of the residue remaining in the sublimation device and the solid matter adhered to the piping (inactive gas outlet 53) by sublimation were extracted with 1,2,4-trimethylbenzene. In these solid matters, fullerene was determined by high-performance liquid chromatography (HPLC) supplied by Shimadzu Corporation, and polycyclic aromatic hydrocarbons were determined by gas chromatography (GC) supplied by Agilent.

Consequently, the composition of the solid matter remaining in the sublimation device was 2.53% by weight of $C_{60}$, 21.5% by weight of $C_{70}$ and the reminder being higher fullerene. No polycyclic aromatic compounds were found. That is, the content of the polycyclic aromatic compounds was below the measurable limit, and it was at most 100 ppm.

Meanwhile, the composition of the solid matter adhered to the piping was 72.7% by weight of $C_{60}$, 22.3% by weight of $C_{70}$, the reminder being higher fullerene. No polycyclic aromatic compounds were found. That is, the content of the polycyclic aromatic compounds was below the measurable limit, and it was at most 100 ppm.

(Example 9) ((Step A))

Toluene was heated, and toluene and pure oxygen were mixed in a gaseous phase at a molar ratio of 1:3, and subjected to incomplete combustion at 5.32 kPa to obtain a mixture comprising a fullerene, polycyclic aromatic hydrocarbons and a carbon-based polymeric component.

The composition of the sooty substance was 20% by weight of fullerene, 200 ppm of polycyclic aromatic hydrocarbons, the reminder being the carbon-based polymeric component.

((Step B-1))

1 g of the sooty substance produced by the combustion method was charged into the sublimation device 51 (height 65 cm, width 45 cm) as shown in Figs. 5(a) and 5(b), and nitrogen was passed at room temperature and a rate of 100 ml/min for 30 minutes to replace the inside of the device therewith. Subsequently, as shown in Fig. 5(c), the sublimation device 51 was put in an electric furnace (muffle furnace) 55. The temperature of the electric furnace 55 was elevated to 500°C, and maintained for 2 hours. The polycyclic aromatic hydrocarbons discharged outside the system were dissolved in 10 g of toluene, and the analysis showed that the concentration of the polycyclic aromatic hydrocarbons in toluene was 20 ppm.

((Step C-2))

The sooty substance from which the polycyclic aromatic compound had been removed was extracted by addition of trimethylbenzene. After the carbon-based polymeric compound as an insoluble component was separated by filtration, trimethylbenzene was distilled off to obtain a high-purity fullerene.

((Reuse of polycyclic aromatic hydrocarbons))

10 g of toluene in which the polycyclic aromatic hydrocarbons removed were dissolved, was diluted with 100 g of fresh toluene. As in the foregoing combustion method, toluene and pure oxygen were mixed at a molar ratio of 1: 3, and the mixture was subjected to incomplete combustion to obtain a fullerene-containing mixture.

(Example 10) ((Step A))

Fresh toluene was heated, and mixed with pure oxygen in a gaseous phase at a toluene/oxygen molar ratio of 1/3. The mixture was subjected to incomplete combustion at 5.32 kPa to produce a fullerene-containing sooty substance. The composition of the resulting sooty substance was as follows.

   Fullerene: 20% by weight
   Polycyclic aromatic hydrocarbons: 200 ppm
   Carbon-based polymeric substance: remainder

((Step B-1))

1 g of the sooty substance produced by the combustion method was put into an electric furnace (sublimation device), and nitrogen was passed at room temperature and a rate of 100 mL/min for 30 minutes to replace the inside of the device therewith. Subsequently, the temperature of the electric furnace was elevated to 500°C, and maintained for 2 hours to obtain polycyclic aromatic hydrocarbons discharged outside the system.

((Step C-2))

Since the mixture of fullerene and carbon-based polymeric substance remained within the sublimation device, 20 mL of 1,2,4-trimethylbenzene was added thereto, and the mixture was stirred. An insoluble matter was separated by filtration, and 1,2,4-trimethylbenzene was distilled off in vacuo to obtain fullerene in which the content of polycyclic aromatic hydrocarbon compounds was below the measurable limit (at most 100 ppm).

((Reuse of polycyclic aromatic hydrocarbons))

The above-removed polycyclic aromatic hydrocarbons were continuously burned in a gas mixture of hydrogen and air. But no polycyclic aromatic hydrocarbons were detected in the gas exhausted, and this combustion heat could be used as a heat raw material of the sublimation device.

(Reference Example 3) ((Step D-2))

6.0 g of a mixture of a fullerene, polycyclic aromatic hydrocarbons and a carbon-based polymeric component produced by the combustion method and 100 mL of 1,2,4-trimethylbenzene were mixed in a 200 mL conical flask at room temperature. The mixture was dipped in an ultrasonic washer for 30 minutes, stirred with a magnetic stirrer for 30 minutes, and redipped in the ultrasonic washer for 30 minutes. The extract (slurry) was filtered with nitrogen under pressure of 2 kgG using a PTFE membrane filter of 0.5 μm with a diameter of 142 mm manufactured by ADVANTEC and a pressure filter manufactured by the same company, and the filtrate was analyzed. The results are shown in Table 2.

(Example 11) ((Step D-2 + E-2))

6.0 g of a mixture of a fullerene, polycyclic aromatic hydrocarbons and a carbon-based polymeric component produced by the combustion method and 100 mL of 1,2,4-trimethylbenzene were mixed in a 200 mL conical flask at room temperature. The mixture was dipped in an ultrasonic washer for 30 minutes, stirred with a magnetic stirrer for 30 minutes, and redipped in the ultrasonic washer for 30 minutes. The slurry was filtered with nitrogen under pressure of 2 kgG using a PTFE membrane filter of 0.5 μm with a diameter of 142 mm manufactured by ADVANTEC and a pressure filter manufactured by the same company.

50 mL of dimethyl sulfoxide and 5 mL of water were added to 66.4 g of the obtained filtrate, and the mixture was stirred with a 200 mL funnel for 10 minutes, allowed to stand still, and separated into an oil layer (1,2,4-trimethylbenzene phase) and an aqueous layer (mixed phase of dimethyl sulfoxide and water) for analysis. The results are shown in Table 2.

The polycyclic aromatic hydrocarbons was analyzed by gas chromatography, and the amount thereof was calculated in terms of % by area with the amount in Reference Example 3 defined as 100.

(Example 12) ((Step D-2 + E-2))

50 mL of dimethyl sulfoxide and 5 mL of water were added again to the oil layer obtained by the same procedure as in Example 11 at room temperature. The mixture was stirred with a 200 mL funnel for 10 minutes, allowed to stand still, and separated into an oil layer (1,2,4-trimethylbenzene phase) and an aqueous layer (mixed phase of dimethyl sulfoxide and water) for analysis. The results are shown in Table 2.

Table 2

| | | | Polycyclic aromatic hydrocarbons |
|---|---|---|---|
| Reference Example | 3 | | 100 |
| Example | 11 | Aqueous phase | 18.7 |
| | | Oil phase | 81.3 |
| | 12 | Aqueous phase | 24.6 |
| | | Oil phase | 64.2 |

[Results of Reference Example 3 and Examples 11 and 12]

As shown in Table 2, the content of the polycyclic aromatic hydrocarbons in the fullerene can be decreased by extracting the polycyclic aromatic hydrocarbons into the fourth solvent side. Further, the content of the polycyclic aromatic hydrocarbons can further be decreased by repeating the extraction procedure with the fourth solvent.

(Reference Example 4) ((Step D-2))

50.8 g of a mixture of a fullerene, polycyclic aromatic hydrocarbons and a carbon-based polymeric component produced by the combustion method and 446 g of 1,2,4-trimethylbenzene (TMB) were mixed in a 1 L conical flask at room temperature. The mixture was dipped in an ultrasonic washer for 30 minutes, stirred with a magnetic stirrer for 30 minutes, and redipped in the ultrasonic washer for 30 minutes. The slurry was filtered with nitrogen under pressure of 2 kgG using a PTFE membrane filter of 0.5 μm with a diameter of 142 mm manufactured by ADVANTEC and a pressure filter manufactured by the same company. The filtrate was concentrated, crystallized, and dried at 90°C and 20 Torr using an evaporator manufactured by Buich to obtain 4.81 g of a solid matter.

The resulting solid matter was analyzed by the following method. The results are shown in Table 3. The fullerene was analyzed by liquid chromatography, and the polycyclic aromatic hydrocarbons by gas chromatography.

(Example 13) ((Step D-2) + (Step E-2))

75 g of a mixture of a fullerene, polycyclic aromatic hydrocarbons and a carbon-based polymeric component produced by the combustion method and 1,500 cc of TMB were mixed in a 2-L conical flask at room temperature. The mixture was dipped in an ultrasonic washer for 30 minutes. The slurry was filtered with nitrogen under pressure of 2 kgG using a PTFE membrane filter of 0.5 μm with a diameter of 142 mm manufactured by ADVANTEC and a pressure filter manufactured by the same company. 118 g of the filtrate was concentrated to 30 g at 90°C and 20 Torr using an evaporator manufactured by Buich. The solution was charged into a 500 cc separable flask, and stirred with a rotary blade. After the temperature was elevated to 50°C, 125 g of THF was added with a pump for 60 minutes while maintaining this temperature. After the addition, the product was retained for 10 minutes. The solution became slurry. This slurry was filtered in vacuo using a PTFE membrane filter of 0.5 μm with a diameter of 47 mm manufactured by ADVANTEC. After the filtration, 50 cc of THF was further sprayed to conduct washing. The solid matter separated by filtration was dried at 100°C and 5 Torr or less using a vacuum dryer. The resulting solid matter was analyzed by the method shown in reference Example 4. The results are shown in Table 3.

(Example 14) ((Step D-2) + (Step E-2))

75 g of a mixture of a fullerene, polycyclic aromatic hydrocarbons and a carbon-based polymeric component produced by the combustion method and 1,500 cc of TMB were mixed in a 2-L conical flask at room temperature. The mixture was dipped in an ultrasonic washer for 30 minutes. The slurry was filtered with nitrogen under pressure of 2 kgG using a PTFE membrane filter of 0.5 μm with a diameter of 142 mm manufactured by ADVANTEC and a pressure filter manufactured by the same company. 130 g of the filtrate was concentrated, precipitated and dried at 90°C and 20 Torr using an evaporator manufactured by Buich. The solid matter and 156 g of THF were charged into a 200 cc conical flask, and stirred with a magnetic stirrer at 50°C for 70 minutes. The solution became slurry. This slurry was filtered in vacuo using a PTFE membrane filter of 0.5 μm with a diameter of 47 mm manufactured by ADVANTEC. After the filtration, 30 cc of THF was further sprayed to conduct washing. The solid matter separated by filtration was dried at 100°C and 5 Torr or less using a vacuum dryer. The resulting solid matter was analyzed by the method shown in Reference Example 4. The results are shown in Table 3.

Table 3

| | | Fullerene (wt.%) | Polycyclic aromatic hydrocarbons (ppm) | Recovery (%) |
|---|---|---|---|---|
| Reference Example | 4 | 87.36 | 10,000 | 100 |
| Example | 13 | 91.93 | 289 | 94.9 |
| | 14 | 93.60 | 648 | 98.1 |

The recovery was calculated with the recovery in Reference Example 1 defined as 100%.

Advantage of the Invention

The invention can provide a process for producing a high-purity fullerene having a low content of polycyclic aromatic hydrocarbons from a mixture of fullerene, the polycyclic aromatic hydrocarbons and a carbon-based polymeric component by a simple operation.

Further, it can produce a single fullerene more efficiently at lower cost than in the past by a combination of ordinary methods such as column chromatography and fractional recrystallization.

**Claims**

1. A process for producing a fullerene comprising the following steps:

   (step A) a step of forming a mixture comprising fullerene, polycyclic aromatic hydrocarbons and a carbon-based polymeric component,
   (step B) a step of separating the mixture into polycyclic aromatic hydrocarbons and a mixture of fullerene and carbon-based polymeric component, and
   (step C) a step of separating the mixture of fullerene and carbon-based polymeric component into fullerene and carbon-based polymeric component.

2. A process for producing a fullerene comprising the following steps:

   (step A) a step of forming a mixture comprising fullerene, polycyclic aromatic hydrocarbons and a carbon-based polymeric component,
   (step D) a step of separating the mixture into a mixture of polycyclic aromatic hydrocarbons and fullerene, and carbon-based polymeric component, and
   (step E) a step of separating the mixture of polycyclic aromatic hydrocarbons and fullerene into polycyclic aromatic hydrocarbons and fullerene.

3. The process for producing a fullerene according to claim 1 or 2, wherein the step A is a step of forming a mixture comprising fullerene, polycyclic aromatic hydrocarbons and carbon-based polymeric component by thermal cracking method or combustion method using a starting material containing a hydrocarbon compound.

4. The process for producing a fullerene according to claim 3, wherein the hydrocarbon compound as a starting material is an aromatic hydrocarbon compound having from 6 to 20 carbon atoms.

5. The process for producing a fullerene according to claim 1, wherein the step B is a step of mixing the mixture of fullerene, polycyclic aromatic hydrocarbons and carbon-based polymeric substance with an organic solvent having the solubility of $C_{60}$ of 10 mg/L or less to obtain an extract having dissolved therein the polycyclic aromatic hydrocarbons, and subjecting the extract and the mixture of undissolved fullerene and carbon-based polymeric substance to solid-liquid separation.

6. The process for producing a fullerene according to claim 5, wherein the organic solvent having the solubility of $C_{60}$ of 10 mg/L or less is selected from aliphatic hydrocarbons, halogenated aliphatic hydrocarbons, alcohols, ethers, ketones and amides.

7. The process for producing a fullerene according to claim 1, wherein the step B is a step of heating the mixture of fullerene, polycyclic aromatic hydrocarbons and carbon-based polymeric component in the presence of an inactive gas to sublimate the polycyclic aromatic hydrocarbons.

8. The process for producing a fullerene according to claim 7, **characterized in that** the polycyclic aromatic hydrocarbons are sublimated while passing an inactive gas.

9. The process for producing a fullerene according to claim 8, **characterized in that** the inactive gas is nitrogen, helium, neon, argon or a mixture thereof.

10. A process for separating a fullerene according to claim 9, **characterized in that** the temperature at which to sublimate the polycyclic aromatic hydrocarbons is from 100°C to 800°C, and the pressure is from 1 x 10⁻³ Pa to 2 x 10⁵ Pa.

11. The process for separating a fullerene according to claim 10, wherein the pressure at which to sublimate the polycyclic aromatic hydrocarbons is normal pressure.

12. The process for producing a fullerene according to any of claims 1, 5 and 7, wherein the step C is a step of mixing the mixture of fullerene and carbon-based polymeric substance with an organic solvent having the solubility of $C_{60}$ of 1 g/L or more to obtain an extract having fullerene dissolved therein, and subjecting the extract and undissolved carbon-based polymeric component to solid-liquid separation.

13. The process for producing a fullerene according to claim 12, wherein the organic solvent having the solubility of $C_{60}$ of 1 g/L or more is selected from aromatic hydrocarbons and halogenated aromatic hydrocarbons.

14. The process for producing a fullerene according to claim 13, wherein the organic solvent having the solubility of $C_{60}$ of 1 g/L or more is 1,2,4-trimethylbenzene or tetralin.

15. The process for separating a fullerene according to any of claims 1, 5 and 7, wherein the step C is a step of heating the mixture of fullerene and carbon-based polymeric component in presence of an inactive gas to sublimate the fullerene.

16. The process for separating a fullerene according to claim 15, **characterized in that** the inactive gas is nitrogen, helium, neon, argon or a mixture thereof.

17. The process for separating the fullerene according to claim 16, **characterized in that** the temperature at which to sublimate the fullerene is from 400°C to 1, 400°C, and the pressure is from 1 x 10⁻³ Pa to 2 x 10⁵ Pa.

18. The process for separating a fullerene according to claim 2, wherein the step D is a step of mixing the mixture of fullerene, polycyclic aromatic hydrocarbons and carbon-based polymeric component with an organic solvent having the solubility of $C_{60}$ of 1 g/L or more to obtain an extract having dissolved therein polycyclic aromatic hydrocarbons and fullerene, and subjecting the extract and undissolved carbon-based polymeric component to solid-liquid separation.

**19.** The process for producing a fullerene according to claim 18, wherein the organic solvent having the solubility of $C_{60}$ of 1 g/L or more is selected from aromatic hydrocarbons and halogenated aromatic hydrocarbons.

**20.** The process for producing a fullerene according to claim 19, wherein the organic solvent having the solubility of $C_{60}$ of 1 g/L or more is 1,2,4-trimethylbenzene or tetralin.

**21.** The process for producing a fullerene according to claim 2, wherein the step D is a step of heating the mixture of fullerene, polycyclic aromatic hydrocarbons and carbon-based polymeric component in the presence of an inactive gas to sublimate the polycyclic aromatic hydrocarbons and the fullerene.

**22.** The process for separating a fullerene according to claim 2 or 18, wherein the step E is a step of mixing the extract having dissolved therein fullerene and polycyclic aromatic hydrocarbons with an organic solvent having the solubility of $C_{60}$ of less than 1 g/L to precipitate the fullerene and subjecting the fullerene and the solution to solid-liquid separation.

**23.** The process for separating a fullerene according to claim 22, wherein the organic solvent having the solubility of $C_{60}$ of less than 1 g/L is selected from aliphatic hydrocarbons, halogenated aliphatic hydrocarbons, alcohols, ketones, ethers and amides.

**24.** The process for producing a fullerene according to claim 2 or 21, wherein the step E is a step of mixing the mixture of fullerene and polycyclic aromatic hydrocarbons with an organic solvent having the solubility of $C_{60}$ of 10 mg/L or less to obtain an extract having dissolved therein polycyclic aromatic hydrocarbons and subjecting the organic solvent and undissolved fullerene to solid-liquid separation.

**25.** The process for producing a fullerene according to claim 2, 18 or 21, wherein the step E is a step of heating the mixture of fullerene and polycyclic aromatic hydrocarbons in presence of an inactive gas to sublimate the polycyclic aromatic hydrocarbons.

**26.** The process for producing a fullerene according to claim 1 or 2, wherein the total amount of $C_{60}$ and $C_{70}$ in the fullerene is 50% by weight or more.

**27.** The process for producing a fullerene according to claim 1 or 2, wherein the content of the polycyclic aromatic hydrocarbons in the fullerene is 1,000 ppm or less.

**28.** The process for producing the fullerene according to claim 3, wherein the separated polycyclic aromatic hydrocarbons are used as a part of a starting material containing a hydrocarbon compound.

**29.** The process for producing a fullerene according to claim 3, wherein the separated polycyclic aromatic hydrocarbons are used as a part of a fuel used in the thermal cracking process or the combustion process.

**30.** A process for separating a fullerene comprising the following steps:

(step B) a step of separating a mixture containing fullerene, polycyclic aromatic hydrocarbons and a carbon-based polymeric component into polycyclic aromatic hydrocarbons and a mixture of fullerene and carbon-based polymeric component, and
(step C) a step of separating the mixture of fullerene and carbon-based polymeric component into fullerene and carbon-based polymeric component.

**31.** A process for separating a fullerene comprising the following steps:

(step D) a step of separating a mixture of fullerene, polycyclic aromatic hydrocarbons and a carbon-based polymeric component into a mixture of polycyclic aromatic hydrocarbons and fullerene, and carbon-based polymeric component, and
(step E) a step of separating the mixture of polycyclic aromatic hydrocarbons and fullerene into polycyclic aromatic hydrocarbons and fullerene.

32. A fullerene which is obtained by combustion and/or thermal cracking of a hydrocarbon compound, the content of polycyclic aromatic hydrocarbons being 1,000 ppm or less.

Fig.1

# Fig.2

(a)

(b)

# Fig.3

Fig.4

# Fig.5

(a)

54  52

51  53

(b)

54  53(52)

51

(c)

54  52

53

58

57

56  55

# Fig.6

(a)

52

53

(b)

54a

51a

**EP 1 491 496 A1**

<table>
<tr><td colspan="2" align="center"><b>INTERNATIONAL SEARCH REPORT</b></td><td>International application No.<br>PCT/JP03/03033</td></tr>
</table>

**A. CLASSIFICATION OF SUBJECT MATTER**
Int.Cl⁷ C01B31/02

According to International Patent Classification (IPC) or to both national classification and IPC

**B. FIELDS SEARCHED**

Minimum documentation searched (classification system followed by classification symbols)
Int.Cl⁷ C01B31/02

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)
CA(STN)

**C. DOCUMENTS CONSIDERED TO BE RELEVANT**

| Category* | Citation of document, with indication, where appropriate, of the relevant passages | Relevant to claim No. |
|---|---|---|
| X | WO 95/06001 A1 (HOECHST AG.),<br>02 March, 1995 (02.03.95),<br>Full text | 1,3,4-6,<br>12-14,26-30,<br>32 |
| Y | & JP 9-501648 A<br>Full text<br>& EP 717721 A1      & GB 9317342 D<br>& CA 2169846 A      & CN 1131408 A | 7-11,15-17 |
| X | JP 6-56414 A (Mitsui Engineering & Shipbuilding Co., Ltd.), | 2-4,18-24,<br>26,27,31,32 |
| Y | 01 March, 1994 (01.03.94),<br>Par. Nos. [0029] to [0034], [0044] to [0047]<br>(Family: none) | 15-17,25 |

[X] Further documents are listed in the continuation of Box C.    [ ] See patent family annex.

| | |
|---|---|
| \*   Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>24 April, 2003 (24.04.03) | Date of mailing of the international search report<br>13 May, 2003 (13.05.03) |
|---|---|
| Name and mailing address of the ISA/<br>    Japanese Patent Office | Authorized officer |
| Facsimile No. | Telephone No. |

Form PCT/ISA/210 (second sheet) (July 1998)

**EP 1 491 496 A1**

## INTERNATIONAL SEARCH REPORT

International application No.

PCT/JP03/03033

C (Continuation). DOCUMENTS CONSIDERED TO BE RELEVANT

| Category* | Citation of document, with indication, where appropriate, of the relevant passages | Relevant to claim No. |
|---|---|---|
| X | JP 5-58611 A (Idemitsu Kosan Co., Ltd.), 09 March, 1993 (09.03.93), | 2-4,26,27, 31,32 |
| Y | Par. Nos. [0009] to [0036] (Family: none) | 7-11,25 |
| X | JP 6-183711 A (Nippon Bunko Kabushiki Kaisha), 05 July, 1994 (05.07.94), Claims; Par. No. [0011] (Family: none) | 1,3-5,12,26, 27,30,32 |
| X | A.Yu.ZAKHAROV et al., Electronic absorpotion spectra determination of $C_{60}$ content in soot pro- | 1,3-14,26, 27,30,32 |
| Y | duced in hydrocarbon, J. Appl. Spectrosc., 2000, Vol.67, No.2, page 349 to 354 | 7-11 |
| X | R.WANG et al., $C_{60}$ detection soot formed in ben- zene liquid spray combustion in a shock tube, Flu- llerene Science & Technology, 1995, Vol.3, No.5, pages 553 to 563 | 2-4,18-20, 26,27,31,32 |
| X | J.Thomas MCKINNON et al., Combustion Synthesis of Fullerenes, Combustion and Flame, 1992, Vol.88, No.1, pages 102 to 112 | 2-4,18-20, 22-24,26,27, 31,32 |
| X | J.B.Howard et al., Production of $C_{60}$ and $C_{70}$ in Benzene-Oxygen Flames, J. Phys. Chem., 1992, Vol.96, pages 6657 to 6662 | 2-4,18-20, 26,27,31,32 |
| P,X | US 2003/0044341 A1 (J. Michael ALFORD et al.), 06 March, 2003 (06.03.03), Full text (Family: none) | 1-32 |

Form PCT/ISA/210 (continuation of second sheet) (July 1998)

37